(19) Europäisches Patentamt / European Patent Office / Office européen des brevets

(11) **EP 4 726 694 A1**

(12) **EUROPÄISCHE PATENTANMELDUNG**

(43) Veröffentlichungstag:
**15.04.2026 Patentblatt 2026/16**

(21) Anmeldenummer: **24205978.0**

(22) Anmeldetag: **10.10.2024**

(51) Internationale Patentklassifikation (IPC):
**G08G 1/01** (2006.01) **B60W 40/08** (2012.01)
**B60W 40/09** (2012.01) **G06V 20/54** (2022.01)
**G06V 20/59** (2022.01) **G06V 40/20** (2022.01)
**G08G 1/015** (2006.01) **G08G 1/017** (2006.01)
**G08G 1/04** (2006.01) **G08G 1/052** (2006.01)

(52) Gemeinsame Patentklassifikation (CPC):
**G08G 1/04; B60W 40/08; B60W 40/09;
B60W 50/14; G06V 10/82; G06V 20/54;
G08G 1/0112; G08G 1/0116; G08G 1/0133;
G08G 1/015; G08G 1/0175; G08G 1/052;
G08G 1/054;** B60W 2050/143; B60W 2420/403

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder:
• **Jenoptik Robot GmbH**
  **40789 Monheim (DE)**
• **JENOPTIK UK Ltd**
  **Camberley GU15 3YL (GB)**

(72) Erfinder:
• **Kienitz, Stefan**
  **40789 Monheim (DE)**
• **Eaton, Gavin**
  **Camberley GU15 3YL (GB)**
• **Heiner, Andreas**
  **40789 Monheim (DE)**
• **Reuhl, Stefan**
  **40789 Monheim (DE)**

(74) Vertreter: **Waldauf, Alexander**
  **Jenoptik AG**
  **Carl-Zeiß-Straße 1**
  **07743 Jena (DE)**

(54) **VERFAHREN ZUM ERKENNEN UND ZUR VORHERSAGE EINER GEFÄHRDUNGSHANDLUNG**

(57) Die Erfindung betrifft ein Verfahren zum Erkennen und zur Vorhersage einer Gefährdungshandlung, einen computerlesbaren Datenträger, eine Detektionseinheit (1), eine Aufnahmeeinheit (2) und ein System (100).

Fig. 2

EP 4 726 694 A1

**Beschreibung**

Die Erfindung betrifft ein Verfahren zum Erkennen und zur Vorhersage einer Gefährdungshandlung, einen computerlesbaren Datenträger, eine Detektionseinheit, eine Aufnahmeeinheit und ein System.

Bekannt sind Aufnahmeeinheiten, welche eingerichtet sind zum Aufnehmen von Aufzeichnungen, insbesondere Bildern und/oder Videos. Diese können im Rahmen der Verkehrsbeobachtung verwendet werden, um Gefahrenhandlungen, beispielsweise Geschwindigkeitsübertretungen, aufzunehmen. Dies kann beispielsweise in Kombination mit einer Lidar-Einheit zum Erfassen, beispielsweise zur Geschwindigkeitsmessung, von Fahrzeugen verwendet werden.

Der Stand der Technik weist dabei Nachteile auf. So kann es sein, dass Gefahrenhandlungen nicht automatisiert erkannt werden können. Dies kann den Komfort reduzieren und/oder Kosten erhöhen. Es kann auch vorgesehen sein, dass bestimmte Gefahrenhandlungen, etwa das Fehlen eines Sicherheitsgurtes und/oder eine Ablenkung des Fahrers, insbesondere durch ein mobiles Endgerät (z. B. Smartphone), nicht erkannt und/oder nicht geahndet werden (können). Dies kann die Sicherheit reduzieren. Auch kann es sein, dass ein Aufnehmen und/oder Detektieren von Gefahrenhandlungen nicht ausreichend effizient und/oder mit ausreichender Robustheit bzw. Genauigkeit erfolgen kann.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, Effizienz, Automatisierungsgrad, Datenschutz, Sicherheit, Kosten und/oder Robustheit zu optimieren.

Die voranstehende Aufgabe wird gelöst durch ein Verfahren mit den Merkmalen des unabhängigen Verfahrensanspruchs, durch einen computerlesbaren Datenträger mit den Merkmalen des unabhängigen Patentanspruchs betreffend einen computerlesbaren Datenträger, durch eine Detektionseinheit mit den Merkmalen des unabhängigen Patentanspruchs betreffend eine Detektionseinheit, durch eine Aufnahmeeinheit mit den Merkmalen des unabhängigen Patentanspruchs betreffend eine Aufnahmeeinheit sowie durch ein System mit den Merkmalen des unabhängigen Systemanspruchs. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen computerlesbaren Datenträger und/oder im Zusammenhang mit der erfindungsgemäßen Detektionseinheit und/oder im Zusammenhang mit der erfindungsgemäßen Aufnahmeeinheit und/oder im Zusammenhang mit dem erfindungsgemäßen System und jeweils umgekehrt, sodass bezüglich der Offenbarung zu den einzelnen Erfindungsaspekten stets wechselseitig Bezug genommen wird bzw. werden kann. Insbesondere gelten Vorteile die im Rahmen des ersten, zweiten, dritten, vierten und/oder fünften Aspekts beschrieben werden, auch jeweils für den ersten, zweiten, dritten, vierten und/oder fünften Aspekt.

Die obenstehende Aufgabe wird gemäß einem ersten Aspekt gelöst durch ein Verfahren zum Erkennen einer Gefährdungshandlung bei einer Fahrt eines Fahrzeugs durch einen Fahrer, aufweisend:

- Erfassen, durch eine Detektionseinheit, von Empfangsdaten, welche spezifisch sind für eine Fahrt des Fahrzeugs,
- Detektieren, durch einen Detektionsalgorithmus, einer Gefährdungshandlung bei der Fahrt des Fahrzeugs durch den Fahrer in Abhängigkeit von den Empfangsdaten,
- Ausgeben, durch die Detektionseinheit, eines Detektionsergebnisses in Abhängigkeit von dem Detektieren und
- Aufnehmen, durch eine Aufnahmeeinheit, einer Aufnahme des Fahrers in Abhängigkeit von dem Detektionsergebnis.

Dabei ist unter Fahrzeug vorliegend ein jedes Mittel der Fortbewegung zu verstehen und es umfasst alle Fortbewegungsmittel für unterschiedlichste Verkehrsteilnehmer an sich (auch z.B. Schuhe, Rollschuhe, Skier, Fahrräder, Mofas, Motorräder, PKW, LKW, Luft- und Wasserfahrzeuge, insbesondere Drohnen).

Das Verfahren gemäß dem ersten Aspekt kann dabei zumindest teilweise computer-implementiert sein und/oder wiederholt durchgeführt werden. Vorteilhafterweise kann bei dem Verfahren zumindest einer der beschriebenen Schritte durchgeführt werden, wobei die Schritte bevorzugt nacheinander in der angegebenen Reihenfolge oder alternativ in einer abweichenden beliebigen Reihenfolge durchgeführt werden und ggf. auch einzelne Schritte wiederholt werden können. Vorzugsweise kann das Verfahren fortwährend durchgeführt werden und insbesondere zur Verkehrsüberwachung bzw. zum Erfassen und/oder Detektieren in Bezug auf eine befahrene Straße, z. B. eine Autobahn, eingerichtet sein. So können beispielsweise (fahrende) Fahrzeuge auf Fahrbahnspuren einer (Schnell-)Straße und/oder Autobahn beobachtet werden. Durch das Verfahren können dabei Gefährdungshandlungen erfasst und/oder detektiert werden. Basierend auf den Outputs, insbesondere dem Detektionsergebnis, kann eine Strafverfolgung durchgeführt werden. Dabei können eine Steuereinheit und/oder Mittel zur Datenverarbeitung, insbesondere (in) der Detektionseinheit und/oder Aufnahmeeinheit, das Verfahren (zumindest teilweise) implementieren, beispielsweise durch (kombiniertes) Durchführen der (oben genannten) Schritte und/oder Ansteuern und/oder Regeln entsprechender Komponenten (z. B. Lidar-Einheit und/oder Kamera).

Das Verfahren kann zum Erkennen einer Gefährdungshandlung, insbesondere also eines Verstoßes gegen Verkehrsregeln und/oder (für den Fahrer und/oder andere Verkehrsteilnehmer) gefährdender Handlungen/Fahrweise, eingerichtet sein. Dabei kann die Gefährdungshandlung beispielsweise ein (unkontrolliertes) Abweichen von einer Fahrbahn (etwa auf einer Autobahn) umfassen. Dadurch können andere Verkehrsteilnehmer geschnitten und/oder kann ein Unfall provoziert werden. Entsprechend kann eine Gefahrenhandlung bei einer Fahrt (also einem Fahren des Fahrzeugs, insbesondere durch den Fahrer) erfolgen. Dabei kann das Fahrzeug (durch den Fahrer) entlang einer Fahrtrajektorie gesteuert werden. Normalerweise kann dabei die Fahrtrajektorie des Fahrzeugs (abgesehen von geplanten Spurwechseln) innerhalb der Fahrbahnmarkierungen erfolgen, welche eine Fahrspur begrenzen. Eine Gefährdungshandlung (siehe auch unten) kann dabei beispielsweise ein (unkontrolliertes) Abweichen von einer (vorgegebenen) Fahrspur umfassen. Die Gefährdungshandlung kann beispielsweise die (unerlaubte) Verwendung eines und/oder die Ablenkung durch ein mobiles Endgerät oder eines gefährlichen oder auffälligen Gegenstands (z.B. Maske, Pistole) aufweisen und/oder darauf zurückzuführen sein. Eine (derartige) Ablenkung des Fahrers kann sich insbesondere auf die Fahrt des Fahrzeugs auswirken, was vorteilhafterweise (von außen und/oder durch ein Detektieren) erkannt werden kann (basierend auf auffälliger und/oder von der Norm abweichender Fahrweise, etwa Schlangenlinienfahrt). Vorzugsweise ist das Verfahren dazu eingerichtet, eine (auffällige und/oder von der Norm abweichende und/oder unerwartete) Fahrt des Fahrzeugs im Rahmen des Detektierens festzustellen. Die Ablenkung kann auch im Sinne einer androhenden Gefahrenhandlung oder Gefährdungshandlung daraus resultieren, dass zumindest ein Insasse des Fahrzeugs oder als Verkehrsteilnehmer maskiert ist, d.h. sein Gesicht und/oder weitere Körperteile durch eine Abdeckung verdeckt oder sich eine Waffe wie z.B. ein Messer oder eine Pistole im Detektionsbereich befindet, welche durch Objekterkennung registriert wird. Dieses könnte eine Gefahrenhandlung und/oder Gefährdungshandlung zur Beeinflussung der öffentlichen Sicherheit darstellen (Stichwort: Civil Security). Gleiches gilt für ein Erfassen und Zuordnen von Merkmalen eines Gesichts, welches durch einen Gesichtserkennungsalgorithmus detektiert wird und mit einem Abgleich einer Datenbank zu einer Auffälligkeit führt, welche auf eine zukünftige oder bereits abgeschlossene Gefahrenhandlung und/oder Gefährdungshandlung (z.B. Raub oder Banküberfall oder Entführung) hinweist. Im Falle einer Entführung könnte eine Bildaufnahme des Gesichts des entführten Opfers durch eine Kamera der Detektionseinheit in Verbindung mit einer automatischen Gesichtserkennungssoftware der Detektionseinheit und Abgleich einer Datenbank bzw. einer Referenzbildaufnahme zur Bestimmung einer vorliegenden Gefährdungshandlung (d.h. Entführung) ausgewertet werden. Die Gefährdungshandlung muss nicht zwangsläufig zu einer Ordnungswidrigkeit oder einen Unfall oder ein Delikt bzw. Verbrechen führen. Die Gefährdungshandlung sollte jedoch feststellbar sein und im Falle einer Feststellung dokumentierbar sein. Die Gefährdungshandlung kann auch nur potenziell vorliegen und zum Zeitpunkt der Detektion nicht im vollen Umfang wirken, sondern schwebend wirksam sein. Dieses wird am Beispiel der "Pistole auf dem Beifahrersitz" deutlich: Die eigentliche Gefährdungshandlung bzw. deren vollumfängliche Wirkung wird erst z.B. bei einer Polizeikontrolle mit dem Anhalten des Fahrzeugs wirksam. Dann erst könnte die Pistole als Waffe gegen den Polizisten gerichtet werden und eingesetzt werden. Ähnlich verhält es sich mit dem Mobiltelefon auf dem Schoß des Fahrers. Auch hier wird die Gefährdungshandlung erst vollumfänglich wirksam, wenn hierdurch ein Unfall passiert. Je nach Gesetzeslage handelt es sich in beiden Fällen um Gefährdungshandlung, die bereits mit der Detektion vorliegen (man darf während der Fahrt nicht mit dem Mobiltelefon texten und man darf keine Waffen offen auf dem Beifahrersitz transportieren). Das Erkennen einer Gefährdungshandlung geschieht bei einer Fahrt eines Fahrzeugs, welches durch einen Fahrer gelenkt (bewegt/gesteuert) wird. Die Fahrt kann auch (zumindest im Zeitpunkt der Detektion) statisch sein, wenn das Fahrzeug oder der Verkehrsteilnehmer kurz anhält (z.B. an einer Ampelkreuzung). Es wird ausdrücklich darauf hingewiesen, dass die Gefährdungshandlung nicht ausschließlich oder primär durch den Fahrer erfolgen muss. Es gibt Situationen, in denen der Fahrer den Beifahrer bittet, das Lenkrad festzuhalten, weil der Fahrer z.B. etwas essen möchte und dafür beide Hände benötigt. Dann geht beim abrupten (falschen) Lenken die Gefahr und damit die Gefährdungshandlung eher vom Beifahrer aus. Dennoch fällt die Verantwortung auf den Fahrer zurück. Im Falle eines maskierten Beifahrers ist ebenfalls eine Interaktion zwischen Fahrer und Beifahrer zu vermuten. Der Fahrer wird nicht seine volle Konzentration auf den Straßenverkehr richten können, wenn neben ihm ein maskierter Beifahrer sitzt. Es ist von der Detektionsmöglichkeit der Vorhersage einer Gefährdungshandlung in diesem Falle einfacher, die Bilddaten und Objektdaten (Maske) des Beifahrers zu verwenden, da man die Ablenkung des Fahrers und die daraus resultierende Gefährdungshandlung erst aus diesen ableitet. Analog gilt diese Erkenntnis auch für auffällige oder gefährliche Objekte (z.B. Maske oder Pistole) und deren Objektdaten auf der Rückbank, innerhalb der Fahrgastzelle oder außerhalb dieser. Es ist unerheblich, ob es sich bei den Gefährdungshandlungen um zwei unterschiedliche Gefahren handelt (einmal Unfallgefahr durch ggf. zu schnellem Fahren des Fahrers und einmal die potenzielle Gefahr eines Banküberfalls durch den Beifahrer).

Das Aufnehmen durch eine Aufnahmeeinheit, einer Aufnahme des Fahrers in Abhängigkeit von dem Detektionsergebnis beschränkt nicht den Bildausschnitt auf den Fahrer selbst, sondern kann je nach Detektionsergebnis auch den Beifahrer und/oder weitere Insassen und/oder Objekte abbilden. Der Fahrer als verantwortlicher Fahrzeugführer sollte jedoch zumindest in Ausschnitten mit auf der Aufnahme sein. Es kann von Vorteil sein, wenn der Fokus der Aufnahme z.B. durch die Windschutzscheibe auf einem Objekt z.B. einer Maske des Beifahrers gerichtet ist. Die Detailansichten der Aufnahmen sollen nicht näher spezifiziert werden, da diese dem Stand der Technik üblicher, vollautomatischer und Kt-basierten Ausschnittsvergrößerungsalgorithmen entstammen.

Das Detektieren bzw. die Erkennung von Ablenkung des Fahrers in einem Fahrzeug kann insbesondere durch verschiedene visuelle und verhaltensbasierte Indikatoren erfolgen, die auf moderne Technologien und maschinelles Lernen zurückgreifen. Viele der Technologien sind im Fahrzeug selbst integriert oder in speziellen On-Board-Units (OBU). Das vernetzte Fahren bietet einen Datenaustausch zwischen den im Fahrzeug oder OBU erhobenen Daten und Sende- und Empfangseinheiten bei Verkehrsüberwachungsanlagen (I) mittels I2V- (infrastructure to vehicle) oder V2X- (vehicle to X - everywhere) Protokollen. Somit können solche Daten mit Daten, die durch die Infrastrukturanlage erhoben werden, fusioniert werden. Wichtige, beispielhafte Merkmale und Vorhersagemöglichkeiten, um zu erkennen, ob ein Fahrer abgelenkt sein könnte, sind:

A1. Kopfhaltung und Blickrichtung

Erkennung: Kameras im Fahrzeug können die Kopfhaltung und Blickrichtung des Fahrers überwachen. Wenn der Fahrer wiederholt oder über längere Zeit nicht auf die Straße blickt, sondern z. B. nach unten (auf ein Smartphone) oder zur Seite (auf Beifahrer oder Gegenstände), kann dies ein Zeichen für Ablenkung sein.
Vorhersagemöglichkeiten: Algorithmen, die auf Augen- und Kopfbewegungen oder Gesichtserkennung trainiert sind, können Muster erkennen, die auf Ablenkung hindeuten. Diese Systeme können Warnungen ausgeben, wenn der Blick des Fahrers zu lange von der Straße abweicht.

A2. Augenbewegungen und Blinzelrate

Erkennung: Überwachungskameras können die Augen des Fahrers beobachten, um zu erkennen, ob er häufig blinzelt oder die Augen zu lange geschlossen hält. Eine erhöhte oder ungewöhnliche Blinzelrate kann auf Müdigkeit oder Ablenkung hindeuten.
Vorhersagemöglichkeiten: Systeme zur Erkennung von Müdigkeit und Aufmerksamkeit messen die Blinzelrate, die Augenöffnungsweite und den Lidschluss. Diese Systeme können auch erkennen, ob der Fahrer Anzeichen von Tagträumen zeigt oder die Augen zu lange von der Fahrbahn abwenden.

A3. Handposition am Lenkrad

Erkennung: Kameras oder Drucksensoren im Lenkrad können feststellen, ob der Fahrer beide Hände am Lenkrad hat oder ob eine Hand (oder beide Hände) woanders ist, z. B. um ein Smartphone zu bedienen oder nach Gegenständen zu greifen.
Vorhersagemöglichkeiten: Sensoren und maschinelles Lernen können erkennen, wenn die Hände des Fahrers nicht am Lenkrad sind oder sich wiederholt von der normalen Fahrhaltung entfernen. Dies könnte auf Ablenkung hinweisen, insbesondere wenn das gleichzeitig mit ungewöhnlichen Kopf- oder Augenbewegungen passiert.

A4. Verhaltensänderungen im Fahrstil

Erkennung: Plötzliche oder unregelmäßige Fahrmanöver wie starkes Abweichen von der Spur, abrupte Geschwindigkeitsänderungen oder verzögertes Reagieren auf Verkehrszeichen und -signale können Anzeichen für Ablenkung sein.
Vorhersagemöglichkeiten: Systeme wie Fahrspurerkennung und adaptive Geschwindigkeitsregler können abnormalen Fahrstil erkennen und Alarm schlagen, wenn der Fahrer wiederholt die Spur verlässt oder ungewöhnlich langsam oder abrupt reagiert. Künstliche Intelligenz (KI) kann anhand historischer Fahrdaten und aktueller Manöver feststellen, ob der Fahrer weniger aufmerksam ist als gewöhnlich.

A5. Smartphone-Nutzung

Erkennung: Fahrzeuge können über eingebaute Sensoren oder Smartphone-Schnittstellen erkennen, ob das Smartphone des Fahrers während der Fahrt aktiv ist, etwa durch den Empfang von Nachrichten, Telefonanrufen oder das Tippen auf dem Bildschirm.
Vorhersagemöglichkeiten: Über eine Verbindung zwischen dem Fahrzeug und dem Smartphone (z. B. über Bluetooth oder fahrzeugintegrierte Apps) könnten Systeme erkennen, ob der Fahrer das Smartphone benutzt, und Warnungen ausgeben, wenn dies in Kombination mit anderen Ablenkungsmerkmalen auftritt.

A6. Gesichtsausdruck und Mimik

Erkennung: Analyse der Gesichtsausdrücke des Fahrers kann Hinweise auf emotionale Zustände wie Stress, Wut oder Desinteresse geben, die Ablenkungen verursachen könnten.

Vorhersagemöglichkeiten: KI-basierte Systeme zur Analyse von Gesichtsausdrücken/Gesichtserkennung können emotionale Zustände in Echtzeit erkennen. Wenn der Gesichtsausdruck auf einen stark emotionalen Zustand hinweist (z. B. Stress oder Verärgerung), kann das System eine Warnung ausgeben oder den Fahrer ermutigen, sich zu konzentrieren.

A7. Körperhaltung und Bewegungen

Erkennung: Die Körperhaltung und Bewegungen des Fahrers können Aufschluss über Ablenkung geben. Wenn der Fahrer sich stark bewegt, sich häufig nach hinten umdreht oder sich wiederholt streckt, kann das ein Hinweis darauf sein, dass er abgelenkt ist.

Vorhersagemöglichkeiten: Körperhaltungs-Überwachungssysteme könnten erkennen, ob der Fahrer unruhig ist oder sich häufig aus seiner Position bewegt, was auf eine Ablenkung hindeuten könnte.

A8. Spracherkennung und Analyse von Konversationen

Erkennung: Systeme im Fahrzeug, die Sprache erkennen, können auch darauf achten, ob der Fahrer sich in intensiven Gesprächen oder Diskussionen befindet, insbesondere über Telefon oder mit Passagieren. Intensive Konversationen können die Aufmerksamkeit beeinträchtigen.

Vorhersagemöglichkeiten: Sprachsteuerungsassistenten oder Kommunikationssysteme im Auto können analysieren, wie stark der Fahrer sich auf die Konversation konzentriert und ob dies potenziell zu Ablenkung führt.

A9. Physiologische Daten (z. B. Herzfrequenz, Hautleitfähigkeit)

Erkennung: Physiologische Daten des Fahrers, wie Herzfrequenz oder Hautleitfähigkeit, könnten Hinweise auf Anspannung, Stress oder Ablenkung geben.

Vorhersagemöglichkeiten: Moderne Fahrzeuge mit Wearable-Integrationen (z. B. Smartwatches) oder in Zukunft eingebauten Sensoren könnten diese Daten analysieren und darauf basierend Vorhersagen über den Aufmerksamkeitsgrad des Fahrers treffen.

A10. Umgebungsfaktoren und Multitasking-Erkennung

Erkennung: Systeme können erkennen, wenn der Fahrer gleichzeitig mehrere Tätigkeiten ausführt, z. B. Essen, Trinken, Telefonieren oder das Bedienen eines Infotainmentsystems.

Vorhersagemöglichkeiten: Sensoren im Fahrzeug können erkennen, ob der Fahrer gleichzeitig viele Aufgaben durchführt und daher potenziell abgelenkt ist. Dies könnte zu einer Warnung führen, wenn andere Ablenkungsindikatoren ebenfalls auftreten.

Vorhersagen durch KI und maschinelles Lernen

Erweiterte Systeme zur Fahrerüberwachung: Mit Hilfe von KI und maschinellem Lernen können Fahrerüberwachungssysteme kontinuierlich lernen und sich an das Verhalten des Fahrers anpassen. Sie könnten in der Lage sein, subtile Verhaltensmuster zu erkennen, die auf Ablenkung hindeuten, bevor sichtbare Anzeichen wie das Abweichen von der Spur auftreten.

Vernetzte Fahrzeuge können miteinander kommunizieren und Informationen über abgelenktes Fahrverhalten teilen, um andere Fahrer zu warnen oder im Falle einer potenziellen Gefahr präventive Maßnahmen zu ergreifen.

Die Detektionseinheit und/oder Aufnahmeeinheit können vorzugsweise beabstandet von und/oder vor dem Fahrzeug und/oder bei einer (überwachten) Fahrbahn angeordnet sein, beispielsweise oberhalb der Fahrbahn, neben der Fahrbahn und/oder davon beabstandet (z. B. auf einem Bauwerk, etwa einer Brücke, und/oder auf einem Feld neben der Fahrbahn). Dabei kann sich das Fahrzeug kontinuierlich annähern (auf die Detektionseinheit und/oder Aufnahmeeinheit zufahren). Die Detektionseinheit und/oder Aufnahmeeinheit können demnach zur Verkehrsbeobachtung bzw. zum Überwachen von Fahrzeugen und/oder Fahrern eingerichtet sein.

Das Erfassen, durch eine Detektionseinheit, von Empfangsdaten, welche spezifisch sind für eine Fahrt des Fahrzeugs, kann dabei kontinuierlich durchgeführt werden. Beispielsweise kann die Detektionseinheit als Kamera ausgebildet sein und insbesondere wiederholt Bilder des Fahrzeugs erfassen. Demnach können die Empfangsdaten Fotos und/oder Videodaten aufweisen. Die Empfangsdaten können spezifisch sein für die Fahrt, insbesondere für Fahrstil, Fahrweise und/oder Fahrtrajektorie eines Fahrzeugs. Alternativ oder zusätzlich kann die Detektionseinheit auch eine Lidar-Einheit, insbesondere 3D-Lidareinheit, und/oder eine Radareinheit aufweisen. Es kann dabei vorgesehen sein, dass die Detektionseinheit primär oder nur zum Erfassen von Empfangsdaten eingerichtet ist, welche für die Fahrt des Fahrzeugs und/oder für das Fahrzeug spezifisch sind, und insbesondere nicht spezifisch sind für den Fahrer (wobei dieser beispielsweise nicht [mit-]erfasst wird). Dadurch kann ein einfacheres und/oder robusteres Erkennen von Gefährdungshandlungen bereitgestellt werden, insbesondere, da ein Detektieren von Fahrauffälligkeiten über ein (größeres und/oder leichter zu erfassendes) Fahrzeug effizienter und/oder zuverlässiger erfolgen kann. Dadurch kann (auch) die Privatsphäre des Fahrers geschützt werden (z. B. im Rahmen der DSGVO). Die Empfangsdaten können dabei wiederholt erfasst werden. Die Empfangsdaten können entsprechend spezifisch sein für die (Art der) Detektionseinheit, z. B. Kamerabilder und/oder (3D-)Lidardaten und/oder Radardaten. Dabei können beispielsweise im Rahmen von Lidar und/oder Radar wiederholt Sendesignale ausgesendet werden, welche am Fahrzeug und/oder Fahrer reflektiert werden. Durch das Empfangen der reflektierten Signale können die Empfangsdaten erfasst werden. Es kann auch vorgesehen sein, dass die Empfangsdaten Informationen über weitere Verkehrsteilnehmer umfassen, beispielsweise vorausfahrende, nachfolgende und/oder (auf anderen Spuren) benachbarte Fahrzeuge. Dadurch kann bei dem Detektieren die Fahrt des Fahrzeugs in Abhängigkeit von dem Verhalten der anderen Verkehrsteilnehmer (sofern diese erfasst wurden) bewertet werden. Beispielsweise kann dabei erkannt werden, dass bei der Fahrt des Fahrzeugs der Fahrweg eines anderen Verkehrsteilnehmers (unerwartet) geschnitten wurde. Dies kann bei dem Detektieren entsprechend zu einem positiven Feststellen einer Gefährdungshandlung führen.

Die Detektionseinheit kann, insbesondere beim Erfassen, die gesamte Fahrbahn (z. B. alle Spuren) bzw. einen gesamten Fahrbahnabschnitt abdecken (z. B. bei Video mit ausreichender Tiefenschärfe). Es kann auch vorgesehen sein, dass die Detektionseinheit einen bestimmten (vordefinierten) Distanzbereich (beim Erfassen) abdeckt (z. B. einen technisch möglichen Schärfebereich einer Kamera). Auch kann es vorgesehen sein, dass (nacheinander) unterschiedliche Fahrzeuge (separat) erfasst und/oder verfolgt ("Tracking") werden.

Es kann vorgesehen sein, dass die Detektionseinheit das Erfassen in einem und/oder entlang eines Detektionsbereichs, insbesondere einer Detektionstrajektorie und/oder einer Reihe von Erfassungspunkten, durchführt. Dabei kann ein Erfassen beispielsweise entlang einer bestimmten Fahrspur erfolgen, beispielsweise entlang der Überholspur oder der (ganz) rechten Fahrspur (aus Fahrersicht).

Es kann vorgesehen sein, dass die Aufnahmeeinheit das Aufnehmen in einem und/oder entlang eines Aufnahmebereichs, insbesondere einer Aufnahmetrajektorie und/oder einer Reihe von Aufnahmepunkten, durchführt. Dabei kann ein Aufnehmen beispielsweise entlang einer bestimmten Fahrspur erfolgen, beispielsweise entlang der Überholspur oder der (ganz) rechten Fahrspur (aus Fahrersicht).

Die Aufnahmeeinheit kann, insbesondere beim Aufnehmen, die gesamte Fahrbahn (z. B. alle Spuren) bzw. einen gesamten Fahrbahnabschnitt abdecken (z. B. bei Video mit ausreichender Tiefenschärfe). Es kann auch vorgesehen sein, dass die Aufnahmeeinheit einen bestimmten (vordefinierten) Distanzbereich (beim Erfassen) abdeckt (z. B. einen technisch möglichen Schärfebereich einer Kamera). Auch kann es vorgesehen sein, dass (nacheinander) unterschiedliche Fahrzeuge (separat) erfasst und/oder verfolgt ("Tracking") werden.

Es kann vorgesehen sein, dass auf den Detektionsbereich der Detektionseinheit (nahtlos) ein Aufnahmebereich der Aufnahmeeinheit folgt. Demnach kann ein (beobachtetes) Fahrzeug erst den Detektionsbereich und anschließend den Aufnahmebereich durchfahren (z. B. entlang einer Fahrspur). Es kann vorgesehen sein, dass der Detektionsbereich und/oder Aufnahmebereich voreingestellt und/oder fixiert und/oder fest vorgegeben sind. Beispielsweise kann im Rahmen eines Aufbaus und/oder einer Einstellung der Detektionseinheit der Detektionsbereich festgelegt werden. Beispielsweise kann im Rahmen eines Aufbaus und/oder einer Einstellung der Aufnahmeeinheit der Aufnahmebereich festgelegt werden. Es kann vorgesehen sein, dass ein Erfassen und/oder Detektieren beim Durchfahren des Fahrzeugs durch den Detektionsbereich durchgeführt wird. Anschließend können, insbesondere in Abhängigkeit von dem Detektionsergebnis, Übergabedaten von der Detektionseinheit an die Aufnahmeeinheit übermittelt werden, beispielsweise über eine Datenverbindung zwischen beiden. Dadurch kann eine "Übergabe" von der Detektionseinheit an die Aufnahmeeinheit erfolgen. Beispielsweise kann ein "Erst- oder Anfangsverdacht" bzw. eine positiv ermittelte Gefährdungshandlung an die Aufnahmeeinheit übergeben werden. Diese kann die Gefährdungshandlung erneut aufnehmen, bestätigen und/oder Beweise erzeugen (z. B. ein Bild des Fahrers). Es kann vorgesehen sein, dass sich der Detektionsbereich und der Aufnahmebereich zumindest teilweise überlappen und/oder ein Überschneidungsbereich vorgesehen ist. Dies kann beispielsweise vorteilhaft sein, wenn ein Detektionsergebnis bereits (frühzeitig) auf eine Gefährdungshandlung hindeutet. In diesem Fall kann ein Aufnehmen (sofort) initiiert werden. Dabei kann parallel durch die Detektionseinheit (weiterhin) ein (erneutes und/oder wiederholtes) Erfassen und/oder Detektieren durchgeführt werden. Demnach kann die Detektionseinheit (anschließend) weiterhin unterstützend betrieben werden. Es kann vorgesehen sein, dass der Detektionsbereich vor dem Aufnahmebereich angeordnet ist (bezüglich einer Fahrt bzw. Fahrtrajektorie des Fahrzeugs).

Die Detektionseinheit kann dabei vorzugsweise separat und/oder getrennt von der Aufnahmeeinheit ausgestaltet sein. Die Detektionseinheit kann eingerichtet sein, insbesondere durch das Erfassen und/oder Detektieren einen (begründeten) Anfangsverdacht zu ermitteln und/oder zu bestätigen. Mit anderen Worten kann es vorgesehen sein, dass aufgrund der Fahrt des Fahrzeugs eine Gefährdungshandlung und/oder eine Ablenkung des Fahrers (z. B. durch ein mobiles Endgerät) detektiert wird und/oder zumindest als wahrscheinlich ermittelt wird. Dabei kann eine Fahrt des Fahrzeugs spezifisch sein für eine Gefährdungshandlung und/oder auf eine solche hindeuten. Mit anderen Worten kann sich auch eine Ablenkung und/oder ein Fehlverhalten des Fahrers (nach außen hin) durch die Fahrt des Fahrzeugs bemerkbar machen.

Ein Anfangsverdacht ist notwendig, wenn Behörden oder die Polizei Personen im Auto blitzen und filmen, um den Datenschutz und die Privatsphäre der betroffenen Personen zu schützen. Grundsätzlich dürfen personenbezogene Daten nur für einen klaren und rechtmäßigen Zweck erhoben werden. Ein solcher Zweck könnte zum Beispiel eine vermutete Verkehrsordnungswidrigkeit bzw. Gefährdungshandlung sein. Ohne einen konkreten Verdacht auf eine Gesetzesübertretung wäre es unverhältnismäßig, Daten wie Bilder oder Videos von Autofahrern zu erfassen.

Der Grundsatz der Verhältnismäßigkeit spielt dabei eine wichtige Rolle: Es muss immer abgewogen werden, ob der Eingriff in die Privatsphäre gerechtfertigt ist. Ohne Anfangsverdacht könnte eine anlasslose Überwachung schnell als unzulässiger Eingriff in die Persönlichkeitsrechte angesehen werden. Zudem darf nur das Minimum an Daten erhoben werden, das zur Erreichung des Ziels notwendig ist. In Fällen ohne Verdacht wäre eine Datenerhebung unnötig und unzulässig.

Bild- oder Videoaufnahmen, die Personen erkennbar machen, sind besonders sensible personenbezogene Daten. Der Gesetzgeber in einigen Ländern verlangt, dass solche Daten nur erhoben werden dürfen, wenn eine klare rechtliche Grundlage dafür besteht. Diese Grundlage ist im Fall von Verkehrskontrollen der Anfangsverdacht einer Ordnungswidrigkeit oder Gefährdungshandlung.

Zudem würde eine flächendeckende, anlasslose Überwachung durch Verkehrsüberwachungs- und Videoanlagen den Datenschutzbestimmungen in einigen Ländern widersprechen und könnte als Massenüberwachung ausgelegt werden. Dies wäre ein unverhältnismäßiger Eingriff in die Rechte der Betroffenen. Es geht darum, die Rechte der Einzelnen auf Schutz ihrer Daten zu wahren und nur dann in ihre Privatsphäre einzugreifen, wenn es rechtlich gerechtfertigt ist.

Das Detektieren, durch einen Detektionsalgorithmus, einer Gefährdungshandlung bei der Fahrt des Fahrzeugs (durch den Fahrer) in Abhängigkeit von den Empfangsdaten kann demnach dafür eingerichtet sein, eine Gefährdungshandlung als Anfangsverdacht festzustellen. Demnach kann das Detektieren durch den Detektionsalgorithmus ein Vorhersagen, Vergleichen und/oder Unterscheiden (z. B. Klassifizieren) umfassen. Basierend auf den Empfangsdaten, z. B. Kamerabildern, kann bei dem Detektieren, vorzugsweise durch die Detektionseinheit, eine Gefährdungshandlung festgestellt werden.

Das Detektieren durch den Detektionsalgorithmus kann beispielsweise (im einfachsten Fall) ein Detektieren einer Abweichung, insbesondere einer Fahrtrajektorie des Fahrzeugs (welche durch den Fahrer, z. B. durch ein Lenkmanöver, bedingt wird), von einer durchschnittlichen und/oder erwarteten Fahrtrajektorie umfassen. Demnach kann das Verfahren dazu eingerichtet sein, eine (auffällige und/oder von der Norm abweichende und/oder unerwartete) Fahrt des Fahrzeugs im Rahmen des Detektierens festzustellen. Es kann vorgesehen sein, dass dabei das Detektieren in Abhängigkeit von Vergleichswerten durchgeführt wird. So kann beispielsweise ein mehrfaches Schneiden bzw. Überfahren der Fahrbahnmarkierungen das Detektieren, also ein (positives) Feststellen einer Gefährdungshandlung auslösen. Alternativ kann ein (negatives) Feststellen erfolgen, insbesondere, dass keine Gefährdungshandlung feststellbar ist.

Das Detektieren kann beispielsweise durch den Detektionsalgorithmus ein Vergleichen der Empfangsdaten mit Vergleichswerten aufweisen, welche beispielsweise für den Detektionsbereich spezifisch sind und/oder ermittelt werden. Hierfür können beispielsweise die Fahrzeugmittelpunkte und/oder Außenkontouren erfasst und/oder verwendet werden. Die Vergleichswerte können (frühere) Empfangsdaten von vielen Fahrten bzw. Fahrzeugen aufweisen. Die Vergleichswerte können insbesondere eine optimale Fahrtrajektorie bzw. Spur umfassen. Die Vergleichswerte können dabei ein durchschnittliches Verhalten und/oder eine durchschnittliche bzw. erwartete Fahrt bzw. Fahrtrajektorie aufweisen. Die Vergleichswerte können auch Simulationsergebnisse aufweisen, welche für eine oder eine Vielzahl von (sicheren) Fahrtrajektorien spezifisch sind. Es kann beispielsweise vorgesehen sein, dass bei dem Detektieren die (durchschnittliche) Abweichung und/oder Standardabweichung der Fahrt bzw. Fahrtrajektorie von einer idealen, erwarteten und/oder durchschnittlichen Fahrt bzw. Fahrtrajektorie ermittelt wird, z. B. durch ein punktweises Vergleichen im Detektionsbereich. Wenn beispielsweise die Abweichung (im Mittel) größer ist als ein vordefinierter Schwellwert (z. B. mehr als 50 %), kann ein positives Feststellen einer Gefährdungshandlung erfolgen.

Der Detektionsalgorithmus kann spezifisch für die Detektionseinheit bereitgestellt, beispielsweise trainiert, werden. So kann bei einer Detektionseinheit, welche eine Kamera aufweist, ein Detektionsalgorithmus spezifisch für Kamerabilder sein. Wenn die Detektionseinheit eine (3D-)Lidar-Einheit aufweist, kann der Detektionsalgorithmus spezifisch sein für (3D-)Lidardaten.

Ein 3D-LiDAR (Light Detection and Ranging) ist ein Sensor, der durch das Aussenden von Laserimpulsen und die Messung der Zeit, die diese Impulse für ihre Rückkehr benötigen, eine detaillierte 3D-Karte der Umgebung erstellen kann. In Fahrzeugen wird LiDAR häufig für die Erfassung von Umgebungsinformationen verwendet, aber seine Präzision erlaubt es auch, Details im Fahrzeuginneren zu erkennen und bestimmte Regelverstöße wie Handynutzung oder Gurtverstoß zu detektieren. Gleichzeitig kann der LiDAR-Sensor die Bewegungen eines Fahrzeugs nachverfolgen und die Fahrtrajektorie aufzeichnen.

B1. Erkennung von Verstößen im Fahrzeug: Handynutzung und Gurtverstoß

3D-Abtastung des Fahrzeuginnenraums:

Ein LiDAR-Sensor, der von außen auf ein Fahrzeug gerichtet ist, kann durch die Scheiben hindurch in den Innenraum des Fahrzeugs "sehen". Dies ist möglich, da LiDAR in der Lage ist, reflektiertes Licht von verschiedenen Oberflächen zu erkennen, einschließlich Fensterglas. Es kann also den Fahrer und die Position der Objekte im Fahrzeuginneren in 3D erfassen, indem es viele Punkte (sogenannte Punktwolken) erzeugt, die das Fahrzeuginnere detailliert darstellen.

Handynutzung erkennen: Der LiDAR-Sensor kann anhand der erfassten Punktwolke erkennen, ob der Fahrer ein Objekt (wie ein Handy) in der Hand hält. Durch die Analyse der Position der Hände, des Kopfes und der Arme des Fahrers lässt sich feststellen, ob ein Gerät gehalten wird und ob die Hände am Lenkrad sind. Wenn die Handhaltung oder Kopfbewegungen typisch für die Nutzung eines Handys sind (z.B. nach unten auf ein Telefon schauend), kann das System eine unerlaubte Handynutzung identifizieren.

Gurtverstoß erkennen: LiDAR kann ebenfalls den Gurtverlauf in 3D abbilden. Ein korrekt angelegter Sicherheitsgurt hat eine charakteristische Position über dem Oberkörper und der Schulter des Fahrers. LiDAR kann die Punktwolke der Körperhaltung des Fahrers scannen und prüfen, ob der typische Verlauf des Gurtes vorhanden ist oder fehlt. Wenn der Gurt nicht sichtbar ist, kann ein Gurtverstoß erkannt werden.

Analyse der Punktwolken:

Die durch den LiDAR erfassten Daten werden zu einer detaillierten Punktwolke des Fahrzeuginnenraums verarbeitet. Durch spezielle Algorithmen und Machine-Learning-Modelle können Muster und Formen in diesen Punktwolken erkannt werden, die auf spezifische Verhaltensweisen hinweisen. Beispielsweise erkennt das System die Position der Hände relativ zum Lenkrad, die Kopfneigung oder die Körperhaltung des Fahrers, um sicherzustellen, dass die Fahraufgaben korrekt ausgeführt werden und keine Verstöße wie die Handynutzung oder das Nichttragen eines Gurtes vorliegen. Es können unterschiedlichste Objekte detektiert, analysiert und zugeordnet werden (z.B. in Verbindung mit einem mobilen Endgerät, einer Maske oder einer Pistole innerhalb der Fahrgastzelle).

B2. Aufzeichnung der Fahrtrajektorie

Erfassung der Fahrzeugbewegung:

LiDAR wird häufig außerhalb des Fahrzeugs angebracht, um die Umgebung in 360 Grad zu scannen. Der Sensor sendet kontinuierlich Laserimpulse aus, die von der Umgebung und dem Fahrzeug selbst reflektiert werden. Durch die Erfassung der Positionen des Fahrzeugs in der Umgebung wird eine detaillierte 3D-Karte der Fahrtrajektorie erstellt.

Positionserkennung und Bewegungsrichtung: Durch das ständige Erfassen der Position des Fahrzeugs relativ zu festen Objekten in der Umgebung kann das System präzise Bewegungen in Echtzeit nachverfolgen. Diese Positionsdaten werden kombiniert, um eine exakte Trajektorie des Fahrzeugs zu erstellen, die Informationen zur Geschwindigkeit, Beschleunigung, Lenkwinkel und Spurverlauf enthält.

Kurven und Manöver überwachen: LiDAR kann auch komplexe Fahrmanöver wie Spurwechsel, Kurven oder Abbremsungen erkennen. Der LiDAR erkennt die Distanz zu Hindernissen, Fahrspuren, Verkehrsschildern und anderen Verkehrsteilnehmern und erfasst, wie sich das Fahrzeug in Bezug auf diese Objekte bewegt. So lässt sich auch feststellen, ob das Fahrzeug einem bestimmten Weg oder einer Spur folgt oder ob es potenziell gefährliche Manöver macht.

Verarbeitung der Trajektoriedaten:

Die aufgenommenen LiDAR-Daten werden in Echtzeit analysiert, um die genaue Position und Bewegung des Fahrzeugs zu berechnen. Mithilfe dieser Informationen lässt sich eine Trajektorie erstellen, die die zurückgelegte Strecke, die aktuelle Position und die voraussichtliche Fahrtrichtung des Fahrzeugs zeigt. Diese Daten können für verschiedene Zwecke genutzt werden, z.B. um Unfälle zu vermeiden oder Fahrverhalten zu überwachen.

Durch diese doppelte Erfassung - sowohl innerhalb des Fahrzeugs zur Überwachung von Regelverstößen als auch außerhalb zur Aufzeichnung der Fahrtrajektorie - kann LiDAR nicht nur zur Verkehrsüberwachung, sondern auch zur Verbesserung der Verkehrssicherheit und der Regelkonformität beitragen.

Es kann vorgesehen sein, dass das Detektieren ein Vorhersagen einer Gefährdungshandlung aufweist. Dabei kann der Detektionsalgorithmus in Abhängigkeit von den Empfangsdaten eine Wahrscheinlichkeit dafür berechnen, beispielsweise binär ("ja"/"nein") oder kontinuierlich (z. B mit Werten zwischen 0 und 1), dass eine Gefährdungshandlung vorliegt oder vorliegen wird. Demnach kann beispielsweise ein (eigentlich) unzulässiges Telefonieren bereits zu Auffälligkeit in den Empfangsdaten führen, wenn beispielsweise ein Smartphone aus einer Ablage oder Tasche geholt wird. Die Ausgabe besteht in der Regel aus Bounding Boxes, die jeweils mit einer Klasse und einem Konfidenzwert versehen sind.

Der Detektionsalgorithmus kann ein maschinen-gelerntes Modell aufweisen, welches insbesondere in einem (vorher, also vor der Anwendung, durchgeführten) Training trainiert worden sein kann. Dadurch kann das Modell dafür eingerichtet sein, basierend auf Inputs, insbesondere (Trainings-)Empfangsdaten, beispielsweise 2D-Kamerabildern, 2D-Videos, (3D-)Lidardaten und/oder Radardaten, einen Output bereitzustellen. Der Output kann beispielsweise das Detektionsergebnis aufweisen. Der Output kann binär sein, insbesondere also 0 oder 1. Der Output kann auch ein Klassifizierungsergebnis aufweisen, beispielsweise "ja" (Gefährdungshandlung wurde [positiv] detektiert) oder "nein" (Gefährdungshandlung wurde nicht detektiert/negatives Feststellen). Der Output kann Zusatzinformationen zum Detektionsergebnis beinhalten, die z.B. keine Datenschutzrelevanz beinhalten (z.B. Maske oder Pistole: Achtung, Alarmstufe 1).

Es kann in einer besonders bevorzugten datenschutzkonformen Ausgestaltung vorkommen, dass lediglich der Output und/oder Output in Kombination mit einem Kennzeichen (Nummernschild, Make/Model/Colour Detektion) oder Teil von diesen oder verschlüsseltem String oder Zeichenabfolge existiert und die übrigen Daten der zeitlich betrachtet ersten Detektionseinheit gelöscht werden oder gelöscht wurden. Es erfolgt vorzugsweise ein Löschen der datenschutzrelevanten Daten (Bildaufnahme der Gefährdungshandlung bzw. der verkehrskonformen, nicht zu beanstandende Handlung) nach wenigen Millisekunden nach Datenerhebung und Auswertung (Fahrerfoto). Im Falle einer Detektion einer Gefährdungshandlung können diese Daten auch beibehalten werden und weiterverwendet werden - im Falle, dass keine Gefährdungshandlung detektiert wurde und vorliegt, werden die Daten unwiderruflich, unmittelbar und automatisch gelöscht. Die Outputdaten (oder Outputdaten und Kombinationen) werden in einer bevorzugten Variante an eine weitere Detektionseinheit zur Weiterverarbeitung geleitet.

Es kann vorgesehen sein, dass der Detektionsalgorithmus das YOLO-Verfahren verwendet ("You only look once"): https://arxiv.org/pdf/1506.02640. Entsprechend kann die YOLO-Architektur (Version v1 bis v7 und folgende Versionen) für den Detektionsalgorithmus und/oder Aufnahmealgorithmus verwendet werden. Beispielsweise kann der Detektionsalgorithmus ein (trainiertes) Faltungsnetzwerk aufweisen. Beispielsweise können (im Training und/oder bei der Anwendung) 2D-Kamerabilder als Input verwendet werden, welche insbesondere in einer zeitlichen Abfolge dargestellt sind (z. B. wenn ein Fahrzeug einen Detektionsbereich durchfährt). Die Kamerabilder können eine Auflösung von z. B. 10 MP aufweisen. Auch eine andere Auflösung ist denkbar. Es kann vorgesehen sein, dass ein Ändern der Auflösung (z. B. 448x448 Pixel) erfolgt, um einen Input in das Modell zu ermöglichen. Das Modell kann 24 Faltungsschichten ("convolutional layers") aufweisen, auf welche insbesondere zwei vollständig verbundene ("fully connected") Schichten folgen. Die Schichten können (jeweils nachfolgend) 1x1 Reduktionsschichten gefolgt von 3x3 Faltungsschichten aufweisen. Der Input kann an eine 7x7x64-s-2 Faltungsschicht gegeben werden. Dabei kann "s-2" spezifisch sein für den "Stride", insbesondere also die Schrittgröße des Faltungskernels (bzw. Faltungsfilters), welcher hier beispielsweise einer 2x2 Matrix entspricht (analog einer y x y Matrix bei "s-y"). Anschließend kann eine 2x2-s2 Maxpool-Schicht folgen. Anschließend kann eine 3x3x192 Faltungsschicht folgen. Anschließend kann eine 2x2-s2 Maxpool-Schicht folgen. Anschließend kann eine 1x1x128 Faltungsschicht folgen. Anschließend kann eine 3x3x256 Faltungsschicht folgen. Anschließend kann eine 1x1x256 Faltungsschicht folgen. Anschließend kann eine 3x3x512 Faltungsschicht folgen. Anschließend kann eine 2x2-s2 Maxpool-Schicht folgen. Anschließend kann eine 1x1x256 Faltungsschicht folgen. Anschließend kann eine 3x3x512 Faltungsschicht folgen. Anschließend kann eine 1x1x256 Faltungsschicht folgen. Anschließend kann eine 3x3x512 Faltungsschicht folgen. Anschließend kann eine 1x1x256 Faltungsschicht folgen. Anschließend kann eine 3x3x512 Faltungsschicht folgen. Anschließend kann eine 1x1x256 Faltungsschicht folgen. Anschließend kann eine 3x3x512 Faltungsschicht folgen. Anschließend kann eine 1x1x512 Faltungsschicht folgen. Anschließend kann eine 3x3x1024 Faltungsschicht folgen. Anschließend kann eine 2x2-s2 Maxpool-Schicht folgen. Anschließend kann eine 1x1x512 Faltungsschicht folgen. Anschließend kann eine 3x3x1024 Faltungsschicht folgen. Anschließend kann eine 1x1x512 Faltungsschicht folgen. Anschließend kann eine 3x3x1024 Faltungsschicht folgen. Anschließend kann eine 3x3x1024 Faltungsschicht folgen. Anschließend kann eine $3 \times 3 \times 1024$-s-2 Faltungsschicht folgen. Anschließend kann eine 3x3x1024 Faltungsschicht folgen. Anschließend kann eine 3x3x1024 Faltungsschicht folgen.

Die vorbezeichneten Faltungsschichten können dabei für ein Berechnen (Extrahieren) von Merkmalen ("features") in Abhängigkeit von dem Input eingerichtet sein (bzw. dafür trainiert werden). Anschließend können eine oder (vorzugsweise) zwei vollständig verbundene Schichten ("fully connected layer") folgen, welche insbesondere für ein Berechnen der Klassifizierungswahrscheinlichkeiten und/oder Koordinaten eingerichtet sind. Anschließend kann der Output bereitgestellt werden. Dabei können durch das Modell die Inputdaten in ein SxS-Gitter, insbesondere mit $S \times S$ Zellen, unterteilt werden. Vorzugsweise kann S = 7 verwendet werden, wodurch ein 7x7-Gitter verwendet werden kann. Wenn der Schwerpunkt bzw. Mittelpunkt eines Objekts in eine Zelle fällt, kann das Modell durch diese Zelle ein Detektieren bzw. Klassifizieren durchführen. Für jede Zelle können B Bounding Boxen prädiziert werden (z. B. $B = 2$), insbesondere umfassend eine Konfidenz, welche spezifisch ist für ein Vorhandensein eines Objekts in der Zelle und/oder eine Wahrscheinlichkeit/Sicherheit für die Klassifizierung. Für eine (oder jede) Bounding Box können dabei 5 Outputs berechnet werden, insbesondere *x, y, z, h* und eine Konfidenz. Dabei können *x* und *y* die Koordinaten des Zentrums der Boundingbox relativ zu dem Rand der Zelle repräsentieren. Dabei können die Breite *z* und die Höhe *h* relativ zu dem Gesamtbild die Größe der Boundingbox repräsentieren. Die Konfidenz kann spezifisch sein für den IOU ("Intersection over union") zwischen der Boundingbox und Grundwahrheitsdaten, insbesondere einer korrekten Bounding Box in entsprechenden Grundwahrheitsdaten. Der Output kann eine Klassifizierung bzw. Klassifizierungswahrscheinlichkeit aufweisen. Beispielsweise können C unterschiedliche Klassen von Gefährdungshandlungen vorgesehen sein. Der Output kann beispielsweise eine Klassifizierung in C = 20 unterschiedliche Klassen aufweisen. Die Klassen bzw. die Labels können z. B. spezifisch sein für ein (wiederholtes) Abweichen von einer (erwarteten) Fahrt bzw. Fahrtrajektorie, Überfahren der Fahrbahnmarkierungen, einen zu geringen (Sicherheits-)Abstand zu vorausfahrenden Fahrzeugen, einen zu geringen Abstand zu benachbarten Fahrzeugen (insbesondere auf anderen Spuren), eine zu geringe Geschwindigkeit, überhöhte Geschwindigkeit, überhöhte Beschleunigung und/oder reduzierte Beschleunigung.

Bevorzugt sind die Klassen keine Ausgaben des Netzes. Das Netz gibt die Bounding Boxes und Klassen der Objekte von Interesse im Bild aus - die Werte dieser Objekte werden dann von einem Algorithmus nachbearbeitet, um Geschwindigkeit, Beschleunigung, unerwartete Fahrspuren usw. zu bestimmen. Zu den Ausgaben des Netzes gehören insbesondere auch die Erkennung von Telefonen und Sicherheitsgurten, um unerwünschte Verhaltensweisen zu ermitteln. Es sind jedoch nicht zwangsläufig nur mobile Endgeräte von Interesse. Bevorzugt ist auch eine Objekterkennung, welche in Verbindung mit gefährlichen oder auffälligen Objekten zusammenhängen z.B. einer Maske oder einer Pistole innerhalb oder außerhalb der Fahrgastzelle.

Demnach kann beispielsweise der Output als 7x7x30-Tensor ausgegeben werden. Als Trainingsdaten können eine Vielzahl an Inputdaten bereitgestellt/erfasst werden, welche z. B. als 2D-Kamerabilder für einen bestimmten Fahrbahnabschnitt erfasst wurden (analog zu dem Erfassen bei der Anwendung des Verfahrens), vorzugsweise für den Fahrbahnabschnitt, der auch während einer späteren Anwendung verwendet wird. Dadurch können die Trainingsdaten repräsentativ sein für eine Vielzahl an "normalen" Fahrten bzw. Fahrtrajektorien und für eine (kleinere) Vielzahl an Gefährdungshandlungen. Anschließend kann ein vortrainiertes Netz und/oder kann manuell (durch Menschen) festgestellt werden, welche Klassifizierung für die Trainingsdaten korrekt ist (Grundwahrheitsdaten). Beim Trainieren können die Trainingsdaten in gelabelte Trainingsdaten und/oder ungelabelte Trainingsdaten eingeteilt werden. Die Trainingsdaten können für das Trainieren in ein Testset und ein Validierungsset eingeteilt werden. Beim Trainieren kann es vorgesehen sein, dass die ersten 20 Schichten vortrainiert werden, beispielsweise, indem auf diese eine average-pooling-Schicht und eine vollständig verbundene Schicht folgend angeordnet werden. Die Gewichte können initial zufällig gewählt werden. Die Koordinaten und/oder die Größe der Bounding Box(en) können normalisiert werden, insbesondere relativ zu der Größe der Inputdaten. Es kann eine lineare Aktivierungsfunktion verwendet werden, insbesondere für die (letzte) Schicht bzw. vollständig verbundene Schicht. Es kann, insbesondere für die übrigen Schichten, die folgende Aktivierungsfunktion ("leaky rectified linear activation") verwendet werden:

$$\phi(x) = \begin{cases} x, & \text{wenn } x > 0 \\ 0.1x, & \text{andere Fälle} \end{cases}$$

Beim Trainieren kann der Summenquadratfehler des Outputs des Modells verwendet werden. Eine Verlustfunktion kann bei dem Trainieren minimiert werden. Dabei kann die Verlustfunktion berechenbar sein durch:

$$\lambda_{coord} \sum_{i=0}^{S^2} \sum_{j=0}^{B} \mathbb{I}_{ij}^{obj} \left[ (x_i - \hat{x}_i)^2 + (y_i - \hat{y}_i)^2 \right]$$

$$+\lambda_{coord} \sum_{i=0}^{S^2} \sum_{j=0}^{B} \mathbb{I}_{ij}^{obj} \left[ \left( \sqrt{w_i} - \sqrt{\hat{w}_i} \right)^2 + \left( \sqrt{h_i} - \sqrt{\hat{h}_i} \right)^2 \right]$$

$$+ \sum_{i=0}^{S^2} \sum_{j=0}^{B} \mathbb{I}_{ij}^{obj} \left( C_i - \hat{C}_i \right)^2$$

$$+\lambda_{noobj} \sum_{i=0}^{S^2} \sum_{j=0}^{B} \mathbb{I}_{ij}^{noobj} \left( C_i - \hat{C}_i \right)^2$$

$$+ \sum_{i=0}^{S^2} \mathbb{I}_{i}^{obj} \sum_{c \in classes} \left( p_i(c) - \hat{p}_i(c) \right)^2$$

Zur Optimierung kann der Verlust für die Koordinaten der Bounding Box(en) erhöht werden und/oder der Verlust für die Prädiktion der Konfidenz für Bounding Boxen ohne Objekt reduziert werden. Dafür können die Parameter $\lambda_{coord}$ = 5 und/oder $\lambda_{noobj}$ = 0.5 verwendet werden. Dabei kann $\mathbb{I}_{i}^{obj}$ eingerichtet sein, ein Vorhandensein eines Objekts (z. B. Fahrzeugs) in der i-ten Zelle anzugeben. Dabei kann $\mathbb{I}_{ij}^{obj}$ eingerichtet sein, eine Zuordnung eines bestimmten Bounding-Box-Klassifikators spezifisch für die i-te Zelle anzugeben. Das Trainieren kann über 135 Epochen durchgeführt werden. Die Batchgröße kann 64 aufweisen. Das Momentum kann 0.9 aufweisen. Der weight decay kann 0.0005 aufweisen. Die Lernrate ("learning rate") kann für die ersten Epochen (kontinuierlich) von $10^{-3}$ auf $10^{-2}$ ansteigen. Die Lernrate kann weiterhin für die ersten (z. B. 75) Epochen $10^{-2}$ aufweisen. Die Lernrate kann für die folgenden (z. B. 30) Epochen $10^{-2}$ aufweisen. Die Lernrate kann für die folgenden (z. B. 30) Epochen $10^{-4}$ aufweisen. Optional kann eine Dropout-Schicht verwendet werden, mit einer Rate von 0.5, welche insbesondere nach der ersten vollständig verbundenen Schicht angeordnet ist. Dies kann ein Overfitting verhindern oder reduzieren. Optional kann Data Augmentation verwendet werden. Dabei können ein zufälliges Skalieren und/oder eine Translation der (Input-)Daten von etwa 20 % bezogen auf die ursprüngliche Größe durchgeführt werden. Dabei kann die Helligkeit und/oder Sättigung der (Input-) Daten, insbesondere der 2D-Bilder (bis zu einem Faktor von 1.5 im HSV-Farbraum), zufällig verändert werden. Dies kann (auch und/oder zusätzlich) ein Overfitting verhindern oder reduzieren. Dabei kann die obige Beschreibung auch für 2D- Lidardaten (als Input) und/oder für 2D-Radardaten verwendet werden. Es kann auch vorgesehen sein, dass die Form der Schichten entsprechend für 3D-Daten erweitert wird. Demnach kann die obige Beschreibung auch für ein Trainieren basierend auf 3D-Lidardaten als Input verwendet und/oder analog angewendet werden.

Allgemein steht vorliegend ein Vortraining eines oder mehrerer Netze (CNN) im Vordergrund, ohne Festlegung und Beschränkung auf dessen Schichten.

Es kann vorgesehen sein, dass die Daten innerhalb der Detektionseinheit verschlüsselt sind. Es kann auch vorgesehen sein, dass ein Ausgeben an die Aufnahmeeinheit verschlüsselt erfolgt. Dabei kann insbesondere das Detektionsergebnis verschlüsselt sein.

Das Ausgeben, durch die Detektionseinheit, eines Detektionsergebnisses in Abhängigkeit von dem Detektieren, kann dabei ein Vorliegen (z. B. "ja" oder "nein") und eine Art der Gefährdungshandlung aufweisen (siehe unten). Das Ausgeben kann dabei von der Detektionseinheit an die Aufnahmeeinheit erfolgen, beispielsweise über eine Datenverbindung (z. B. ein physisches Kabel und/oder das Internet und/oder WLAN), die für eine Datenkommunikation eingerichtet ist. Die Detektionseinheit kann eingerichtet sein, Eingabedaten, insbesondere nur, auszugeben, wenn ein positives Feststellen erfolgt ist. Es kann vorgesehen sein, dass die übrigen (Empfangs-)Daten verworfen werden.

Das Aufnehmen, durch eine Aufnahmeeinheit, einer Aufnahme des Fahrers in Abhängigkeit von dem Detektionsergebnis, kann vorzugsweise erfolgen, wenn ein positives Feststellen erfolgt ist und/oder eine Gefährdungshandlung durch das Detektieren festgestellt worden ist. Das Aufnehmen kann durch eine dafür eingerichtete Aufnahmeeinheit durchgeführt werden. Die Aufnahmeeinheit kann eine (weitere und/oder separate) Kamera, eine Radareinheit und/oder eine (3D-)Lidar-Einheit aufweisen. Beispielsweise kann es vorgesehen sein, dass die Detektionseinheit als (3D-)Lidar- Einheit ausgestaltet ist und die Aufnahmeeinheit als Kamera (z.B. PTZ Pan-tilt-zoom Kamera). Die Aufnahmeeinheit kann vorzugsweise eine Kamera aufweisen. Dadurch kann eine Aufnahme des Fahrers, Nummernschilds und/oder Fahrzeugs bereitgestellt werden, welche insbesondere als Beweis für eine Identität des Fahrers verwendet werden kann. Es kann vorgesehen sein, dass die Aufnahmeeinheit eine Beleuchtungseinheit, insbesondere eine Infrarotbeleuchtungseinheit aufweist, welche zum Beleuchten des Fahrers und/oder Fahrzeugs eingerichtet sein kann. Vorzugsweise kann die Beleuchtungseinheit mit der Aufnahmeeinheit, insbesondere einer Kamera der Aufnahmeeinheit, synchronisiert sein. Dadurch kann ein optimal beleuchtetes Bild des Fahrers und/oder Fahrzeugs aufgenommen werden. Die Aufnahmeeinheit kann dazu eingerichtet sein, insbesondere in Abhängigkeit von dem Detektionsergebnis, eine Gefährdungshandlung des Fahrzeugs und/oder Fahrers erneut zu detektieren, festzustellen, zu bestätigen und/oder zu beweisen. Es kann vorgesehen sein, dass die Aufnahmeeinheit, insbesondere in dem Aufnahmebereich, einen Fotopunkt und/oder (mit diesem zusammenfallenden) Beleuchtungspunkt (bzw. eine Ebene) aufweist. Es kann auch vorgesehen sein, dass die Aufnahmeeinheit, insbesondere der Aufnahmebereich, einen (Distanz-)Bereich aufweist, in welchem eine Beleuchtung und/oder ein Aufnehmen eines Kamerabildes ermöglicht wird. Es kann auch vorgesehen sein, dass die Aufnahmeeinheit in Abhängigkeit von dem Detektionsergebnis durch ein Einstellen beeinflusst und/oder eingestellt wird. Dabei kann beispielsweise ein (mechanisches) Ausrichten (z. B. über Stellsignale an entsprechende Aktuatoren) der Aufnahmeeinheit umfasst sein, z. B. auf eine andere und/oder bestimmte Fahrspur (bei mehrspurigen Fahrbahnen). Das Einstellen kann auch dafür eingerichtet sein, das erneute Detektieren zu ermöglichen und/oder zu verbessern. Vorteilhafterweise kann das Aufnehmen ein optisches Erfassen des Fahrzeuginnenraums aufweisen. Dadurch können insbesondere Gefährdungshandlungen, die unmittelbar durch den Fahrer erfolgen, beispielsweise die Verwendung eines Smartphones und/oder ein fehlender Sicherheitsgurt, (direkt) erkannt werden.

Im Rahmen der Erfindung kann es von Vorteil sein, dass das Aufnehmen ein erneutes Detektieren der Gefährdungshandlung aufweist.

Demnach kann ein erneutes Erfassen durchgeführt werden, welches insbesondere analog zu dem Erfassen durchgeführt werden kann. Es kann auch vorgesehen sein, dass dabei die Aufnahmeeinheit eine Kamera aufweist, um zumindest ein Bild des Fahrers, Nummernschilds und/oder Fahrzeugs aufzunehmen. Es kann vorgesehen sein, dass ein erneutes Detektieren durch die Aufnahmeeinheit durchgeführt wird, insbesondere analog zu und/oder in Anlehnung an das Detektieren (der Detektionseinheit). Es kann vorgesehen sein, dass das Detektionsergebnis mit einem Aufnahmeergebnis, welches durch das Aufnehmen, insbesondere das erneute Detektieren erzeugt wird, durchgeführt wird. Dadurch kann das Detektionsergebnis verifiziert werden. Vorteilhafterweise kann das Aufnehmen und/oder erneute Detektieren dabei ein optisches Erfassen des Fahrzeuginnenraums aufweisen. Dadurch können insbesondere Gefährdungshandlungen, die unmittelbar durch den Fahrer erfolgen, beispielsweise die Verwendung eines Smartphones und/oder ein fehlender Sicherheitsgurt, (direkt) erkannt werden. Demnach kann es bevorzugt vorgesehen sein, dass die Detektionseinheit und/oder das Detektieren für ein Ermitteln eines Erstverdachts eingerichtet sind. Dabei kann es vorgesehen sein, dass nicht der Fahrer unmittelbar/direkt erfasst wird. Das Aufnehmen kann (dagegen) für ein Erfassen von Daten über den Fahrer eingerichtet sein. Beispielsweise kann/können durch das Detektieren eine Gefährdungshandlung bzw. Fahrauffälligkeiten, etwa ein Schlangenlinienfahren, detektiert werden. Beispielsweise kann (anschließend) bei dem Aufnehmen die bzw. eine damit verbundene bzw. begründende Gefährdungshandlung ermittelt werden, beispielsweise ein Smartphone, welches der Fahrer an sein Ohr hält. Dadurch kann, ausgehend von und/oder basierend auf dem Detektieren, welches spezifisch ist für das Fahrzeug, ein weiteres Detektieren durch die Aufnahmeeinheit erfolgen, insbesondere des Fahrers (und/oder des Fahrzeugs und/oder Nummernschilds). Dadurch kann die Beweiskraft erhöht werden. Dadurch können auch Verstöße ermittelt werden, welche andernfalls nicht ermittelbar wären. Dadurch kann die Sicherheit erhöht werden.

Es ist auch denkbar, dass das erneute Detektieren von der Detektionseinheit durchgeführt wird. Dabei kann es vorgesehen sein, dass das erneute Detektieren (zusätzlich) von der Detektionseinheit und der Aufnahmeeinheit (jeweils separat) durchgeführt wird. Dadurch können die jeweiligen Informationen jeweils genutzt werden, um eine Gefährdungshandlung zu detektieren und/oder zu beweisen.

Die Detektionseinheit und die Aufnahmeeinheit können an unterschiedlichen Positionen angeordnet sein und/oder (bezüglich der Fahrbahn und/oder des Fahrzeugs) unterschiedliche Blickwinkel aufweisen. Dadurch kann der Informationsgehalt erhöht werden. Dies kann die Effizienz und/oder Robustheit erhöhen.

Die Detektionseinheit und die Aufnahmeeinheit können unterschiedliche Erfassungs- bzw. Aufnahmeeinheiten aufweisen. Dadurch kann der Informationsgehalt erhöht werden. Dies kann die Effizienz und/oder Robustheit erhöhen. Beispielsweise kann die Detektionseinheit eine (3D-)Lidar-Einheit aufweisen und die Aufnahmeeinheit eine Kamera. Beispielsweise kann die Detektionseinheit eine Radareinheit aufweisen und die Aufnahmeeinheit eine Kamera. Beispielsweise kann die Detektionseinheit eine (3D-)Lidar-Einheit und eine Kamera aufweisen und die Aufnahmeeinheit eine Kamera. Beispielsweise kann die Detektionseinheit eine Kamera aufweisen und die Aufnahmeeinheit eine Kamera und eine (3D-)Lidar-Einheit.

Im Rahmen der Erfindung ist es denkbar, dass das erneute Detektieren durch die Aufnahmeeinheit, insbesondere durch einen Aufnahmealgorithmus, durchgeführt wird.

Dabei kann der Aufnahmealgorithmus in und/oder durch die Aufnahmeeinheit implementiert und/oder durchgeführt werden. Der Aufnahmealgorithmus kann dabei separat trainiert werden und/oder für einen anderen Standort und/oder Blickwinkel und/oder eine andere (Aufnahme-)Einheit, z. B. für eine Kamera anstelle einer (3D-)Lidar-Einheit (oder umgekehrt). Es kann vorgesehen sein, dass der Aufnahmealgorithmus identisch ausgestaltet ist zu dem Detektionsalgorithmus, insbesondere, wenn beide basierend auf Kamerabildern oder (3D-)Lidardaten oder Radardaten ausgestaltet sind. Dies kann auch vorteilhaft sein, wenn die Aufnahmeeinheit und Detektionseinheit im Wesentlichen den gleichen Standort und/oder Blickwinkel aufweisen. Insofern wird auf die obigen Ausführungen zum Trainieren der Anwendung verwiesen. Dadurch kann ein Trainingsaufwand reduziert werden. Es kann auch vorgesehen sein, dass die Trainingsdaten und/oder Ergebnisse des Aufnahmealgorithmus verwendet werden, um ein vortrainiertes Netz für den Detektionsalgorithmus bereitzustellen (oder umgekehrt). Es kann auch vorgesehen sein, dass die Detektionseinheit und die Aufnahmeeinheit, beispielsweise für einen Aufnahmebereich (welcher dabei insbesondere auch von der [einstellbaren] Detektionseinheit abgedeckt wird), parallel ein erneutes Detektieren ausführen. Demnach können diese kombiniert verwendet werden. Dabei können beispielsweise die (unterschiedlichen bzw. jeweiligen) detektierten Gefährdungshandlungen abgeglichen und/oder verglichen und/oder verifiziert werden. Es kann auch vorgesehen sein, dass ein Nachtrainieren (Nachjustieren) des Detektionsalgorithmus durch den Aufnahmealgorithmus (oder umgekehrt) durchgeführt wird. Beispielsweise können Fehldetektionen, welche beispielsweise basierend auf dem Output des Aufnahmealgorithmus (von Menschen) ermittelt werden, verwendet werden, um ein Nachtrainieren des Detektionsalgorithmus zu erwirken.

Es kann im Rahmen der Erfindung vorgesehen sein, dass das erneute Detektieren durch die Detektionseinheit, insbesondere durch den Detektionsalgorithmus, durchgeführt wird.

Es kann demnach vorgesehen sein, dass alternativ oder zusätzlich der Detektionsalgorithmus verwendet wird. Dabei kann der Detektionsalgorithmus von der Detektionseinheit und/oder (bevorzugt) der Aufnahmeeinheit durchgeführt und/oder implementiert werden. Die Detektionseinheit kann basierend auf ursprünglichen Empfangsdaten und/oder neu aufgezeichneten Empfangsdaten ein (erneutes) Detektieren durchführen. Dies kann als zusätzliche Informationsquelle verwendet werden, beispielsweise um die Konfidenz der Erfassung einer Gefährdungshandlung zu erhöhen. Dies kann die Robustheit und/oder Zuverlässigkeit verbessern. Dabei kann es vorgesehen sein, dass die Detektionseinheit (physisch) einen größeren Detektionsbereich (im Vergleich zu dem Aufnahmebereich) abdeckt (siehe oben). Der Detektionsalgorithmus kann dabei in und/oder durch die Detektionseinheit implementiert werden.

Es ist ferner denkbar, dass bei dem Erfassen die Empfangsdaten Informationen aufweisen, die bezüglich und/oder spezifisch sind für

- eine Geschwindigkeit des Fahrzeugs,
- eine Beschleunigung des Fahrzeugs,
- eine Fahrtrajektorie des Fahrzeugs, insbesondere relativ zu einer Fahrspurbegrenzung, und/oder
- einen Abstand des Fahrzeugs, insbesondere relativ zu vorausfahrenden Fahrzeugen.

Es kann vorgesehen sein, dass die Empfangsdaten nur und/oder ausschließlich spezifisch sind für ein/das Fahrzeug. Es kann beispielsweise vorgesehen sein, dass die Empfangsdaten Kamerabilder, insbesondere eine Zeitreihe (Video) an Kamerabildern (entlang der Fahrtrajektorie), aufweisen. Alternativ oder zusätzlich kann es vorgesehen sein, dass die Empfangsdaten Radardaten und/oder (hochauflösende) (3D-)Lidardaten aufweisen.

Auch ist es denkbar, dass das Erfassen, durch die Detektionseinheit, insbesondere eine Kameraeinheit, Radareinheit und/oder eine Lidar-Einheit, vorzugsweise eine 3D-Lidareinheit, über einen Erfassungszeitraum, insbesondere wiederholt, durchgeführt wird, für welchen die Empfangsdaten spezifisch sind, wobei für das Detektieren der Detektionsalgorithmus dazu eingerichtet ist, basierend auf den Empfangsdaten ein Vorliegen (z. B. binär bzw. "ja" oder "nein") und eine Art der Gefährdungshandlung zu ermitteln, wobei das Detektionsergebnis für das Vorliegen und die Art der Gefährdungshandlung spezifisch ist, wobei insbesondere die Art der Gefährdungshandlung umfasst:

- ein Abweichen, insbesondere einer Trajektorie, des Fahrzeugs von einer vorgegebenen (erwarteten und/oder [basierend auf Vergleichsdaten] durchschnittlichen) Fahrspur,
- eine überhöhte oder unterdurchschnittliche Geschwindigkeit des Fahrzeugs,
- eine überhöhte oder unterdurchschnittliche, insbesondere erwartete, Beschleunigung des Fahrzeugs,
- ein unzureichender Sicherheitsabstand des Fahrzeugs,
- eine Ablenkung des Fahrers, insbesondere durch ein mobiles Endgerät, und/oder
- eine unzureichende Sicherung, insbesondere des Fahrers, durch einen Sicherheitsgurt.

Eine Kameraeinheit kann Empfangsdaten bereitstellen, insbesondere umfassend (2D-)Kamerabilder. Eine Radareinheit kann Empfangsdaten bereitstellen, insbesondere umfassend (2D-)Radarbilder bzw. Aufzeichnungen.

Eine (2D/3D-)Lidar-Einheit kann Empfangsdaten bereitstellen, insbesondere umfassend (2D/3D-)Lidar-Bilder bzw. Aufzeichnungen. Eine hochauflösende Lidar-Einheit kann dabei insbesondere (auch) dafür eingerichtet sein, einen Fahrzeuginnenraum und/oder Fahrer darzustellen und/oder aufzulösen.

Der Erfassungszeitraum kann beispielsweise spezifisch sein für den Detektionsbereich. Somit kann beispielsweise der Erfassungszeitraum 5 Sekunden aufweisen. Wenn dabei durch das Detektieren keine Gefährdungshandlung detektiert werden kann, kann ein anderes und/oder nachfolgendes Fahrzeug überwacht werden.

Das Vorliegen der Gefährdungshandlung kann binär ausgestaltet sein. Dabei kann eine Gefährdungshandlung positiv festgestellt werden ("ja") oder negativ festgestellt werden ("nein").

Die Art der Gefährdungshandlung kann dabei beispielsweise spezifisch die Gefährdungshandlung beschreiben. Dies kann beispielsweise durch eine Klassifizierung über ein Label erfolgen (siehe oben). Beispielsweise kann die Art der Gefährdungshandlung eine Ablenkung (z. B. Smartphone am Ohr oder auf dem Schoß, Essen, Trinken, Anschnallen, Abschnallen, Körperhaltung, Handhaltung [insbesondere Platzieren der Hand am Lenkrad] und/oder Anwesenheit auf Fahrersitz) und/oder Fahrauffälligkeiten (z. B. unterdurchschnittliche/überhöhte Geschwindigkeit und/oder Beschleunigung und/oder Abstand) aufweisen. Die Art der Gefährdungshandlung kann dabei spezifisch sein für den Fahrer und/oder das Fahrzeug, insbesondere für die Fahrt des Fahrzeugs, z. B die Fahrtrajektorie, Position und/oder einen (oder mehrere) Zeitpunkt(e). Es kann vorgesehen sein, dass die Art der Gefährdungshandlung eine bestimmte (un)erwartete Reaktion, z. B. ein fehlendes Abbremsen bei einer an der Straße angebrachten und/oder einer auf einer Anzeigetafel angezeigten Geschwindigkeitsbegrenzung, aufweist. Dies kann spezifisch sein für eine (noch nicht näher detektierte) Ablenkung.

Im Rahmen der Erfindung ist es optional möglich, dass das Detektionsergebnis eine Positionsinformation aufweist, welche für eine Position des Fahrzeugs und/oder des Fahrers spezifisch ist, wobei die Positionsinformation bei dem Erfassen und/oder Detektieren ermittelt wird, und durch das Ausgeben, insbesondere über eine Datenverbindung, an die Aufnahmeeinheit übermittelt wird, wobei insbesondere ein Einstellen der Aufnahmeeinheit in Abhängigkeit von der Positionsinformation durchgeführt wird.

Dadurch kann die Aufnahmeeinheit (flexibel) eingestellt werden. Beispielsweise kann dabei der Aufnahmebereich und/oder ein Sichtbereich angepasst werden. Dadurch können die Aufnahmeeinheit und/oder die Detektionseinheit (zusammen) einen größeren Bereich abdecken. Es kann vorgesehen sein, dass das Einstellen ein (mechanisches) Ausrichten umfasst, z. B. durch ein Ansteuern entsprechender Aktuatoren mit einem Stellsignal (über eine Datenverbindung). Es kann vorgesehen sein, dass das Einstellen einen Fotopunkt und/oder einen Aufnahmebereich einstellt und/oder festlegt. Durch die Positionsinformation kann eine Übergabe an die Aufnahmeeinheit erfolgen. Diese kann als Initialisierung und/oder Startpunkt für ein Aufnehmen verstanden werden. Es kann auch vorgesehen sein, dass die Positionsinformation Zeitreiheninformationen über die (ermittelte) Fahrtrajektorie des Fahrzeugs aufweist. Dadurch kann ermittelt, insbesondere extrapoliert werden, welche weitere Fahrtrajektorie das Fahrzeug wahrscheinlich aufweisen wird. Dadurch kann die Aufnahmeeinheit das Fahrzeug zielgerichtet verfolgen.

Um ein Fahrzeug eindeutig von einer ersten Detektionseinheit 1 (z. B. Kamera 1) an eine zweite Detektionseinheit 2 (z. B. Kamera 2) oder umgekehrt zu übermitteln, gibt es eine Reihe von Merkmalen, die entweder einzeln oder in Kombination verwendet werden können, um sicherzustellen, dass es sich um dasselbe Fahrzeug handelt und nicht um ein anderes aus der unmittelbaren Umgebung. Zu den wichtigsten Merkmalen gehören:

C1. Nummernschild (Kennzeichen)

Das Kennzeichen eines Fahrzeugs ist eines der eindeutigsten Identifikationsmerkmale. Wenn beide Kameras in der Lage sind, das Kennzeichen zu erfassen, kann dies alleine ausreichen, um das Fahrzeug zu identifizieren.

C2. Fahrzeugtyp und Modell

Der Fahrzeugtyp (z. B. SUV, Limousine, Kleinwagen) und das genaue Modell (z. B. BMW 3er, VW Golf) können ebenfalls helfen, Fahrzeuge zu unterscheiden.

C3. Farbe des Fahrzeugs

Die Farbe ist ein leicht sichtbares Merkmal, das in Verbindung mit anderen Informationen verwendet werden kann, um ein Fahrzeug zu identifizieren.

C4. Fahrtrichtung und Geschwindigkeit

Informationen darüber, in welche Richtung das Fahrzeug fährt und mit welcher Geschwindigkeit es sich bewegt, können zur Bestätigung verwendet werden, ob es sich um dasselbe Fahrzeug handelt, das Kamera 1 gesehen hat.

C5. Besondere Merkmale oder Aufkleber

Aufkleber, Logos, besondere Markierungen oder Kratzer sind sehr individuelle Merkmale, die ein Fahrzeug eindeutig von anderen unterscheiden können.

C6. Fahrzeuggröße und Abmessungen

Die Größe (Länge, Breite, Höhe) des Fahrzeugs kann ebenfalls als Identifikationsmerkmal herangezogen werden, insbesondere wenn das Fahrzeug von anderen Fahrzeugen ähnlichen Typs umgeben ist.

C7. Felgen- und Reifenmerkmale

Die Art der Felgen oder besondere Merkmale der Reifen (z. B. Allwetterreifen, Sportreifen) können zur Identifikation beitragen.

C8. Lichter- und Beleuchtungsmuster

Einige Fahrzeuge haben charakteristische Front- oder Rücklichter, die auffällig sind und zur Unterscheidung genutzt werden können. Blinklichter oder Bremslichter können ebenfalls helfen.

C9. Spurtreue und Fahrverhalten

Das Fahrverhalten eines Fahrzeugs, z. B. die Spurhaltung oder das Beschleunigungs- und Bremsverhalten, kann ebenfalls herangezogen werden, um es von anderen zu unterscheiden.

C10. Fahrzeugladung

Falls das Fahrzeug sichtbare Ladung (z. B. Fahrräder auf einem Dachgepäckträger) transportiert, könnte dies ebenfalls ein Identifikationsmerkmal sein.

C11. 3D-Profil oder Silhouette

Die Detektionseinheiten könnten 3D-Profile oder Silhouetten erfassen, die die Form des Fahrzeugs genauer darstellen. Dies könnte helfen, besonders ähnliche Fahrzeuge besser zu unterscheiden.

C12. Erfassung der Fahrzeugachse und Abstand der Räder

Manche Systeme können den Abstand der Räder oder die Position der Fahrzeugachse messen, was ein weiteres Merkmal zur Identifikation bieten kann.

In der Praxis wird oft eine Kombination dieser Merkmale verwendet, um die Genauigkeit der Identifikation zu maximieren. Insbesondere die Kombination aus Kennzeichen, Fahrzeugtyp, Farbe und Fahrtrichtung liefert in der Regel ausreichend Informationen, um sicherzustellen, dass es sich um dasselbe Fahrzeug handelt.

Zeitstempelung (Timestamping)

Die Zeitstempelung ist ein wichtiges Merkmal, das den genauen Zeitpunkt angibt, zu dem das Fahrzeug von der ersten Detektionseinheit (z. B. Kamera 1) erfasst wurde. In Kombination mit der Erfassung des gleichen Fahrzeugs von einer zweiten Detektionseinheit (z. B. Kamera 2) kann die Zeitstempelung helfen, zu berechnen, ob es sich mit der erwarteten Geschwindigkeit und Beschleunigung und Fahrtrichtung um dasselbe Fahrzeug handelt.

Kombinationen von Merkmalen mit Zeitstempelung

D1. Kennzeichen + Zeitstempel

Ein Fahrzeug wird anhand des Kennzeichens eindeutig identifiziert, und die Zeitstempelung ermöglicht es, den Zeitpunkt der Erfassung an beiden Detektionseinheiten zu vergleichen. Dies stellt sicher, dass das Fahrzeug den erwarteten Weg zwischen beiden Kameras zurückgelegt hat.

D2. Fahrzeugtyp + Farbe + Zeitstempel

In Fällen, in denen kein Kennzeichen erfasst werden kann, können der Fahrzeugtyp und die Farbe in Verbindung mit der Zeitstempelung dazu beitragen, ein Fahrzeug zu identifizieren. Wenn ein Fahrzeugtyp und eine Farbe zur erwarteten Zeit an der zweiten Kamera erscheinen, erhöht dies die Wahrscheinlichkeit, dass es sich um dasselbe Fahrzeug handelt.

D3. Fahrtrichtung + Geschwindigkeit + Zeitstempel

Die Kombination der Fahrtrichtung und der Geschwindigkeit eines Fahrzeugs mit der Zeitstempelung ermöglicht es, die erwartete Ankunftszeit an der zweiten Detektionseinheit zu berechnen. Wenn ein Fahrzeug innerhalb dieses Zeitrahmens erfasst wird, handelt es sich höchstwahrscheinlich um dasselbe.

D4. Besondere Merkmale (Aufkleber, Kratzer) + Zeitstempel

Fahrzeuge mit markanten Besonderheiten (z. B. Kratzer oder Aufkleber) lassen sich leichter erkennen. Wenn diese in Kombination mit einem entsprechenden Zeitstempel vorliegen, ist die Identifikation sehr genau.

D5. Fahrzeuggröße + Zeitstempel

Die Größe des Fahrzeugs, kombiniert mit einem Zeitstempel, kann ebenfalls helfen, ein Fahrzeug eindeutig zu identifizieren, insbesondere wenn mehrere ähnliche Fahrzeuge in der Umgebung unterwegs sind.

D6. Felgen-/Reifenmerkmale + Zeitstempel

Wenn spezielle Felgen oder Reifenmuster sichtbar sind, kann die Zeitstempelung dabei helfen, das gleiche Fahrzeug an verschiedenen Detektionspunkten zu bestätigen.

D7. Beleuchtungsmuster (z. B. Bremslichter) + Zeitstempel

Fahrzeuge mit markanten oder blinkenden Lichtern können durch eine Kombination von Beleuchtungsmustern und Zeitstempel leichter verfolgt werden, um festzustellen, ob es sich um dasselbe Fahrzeug handelt.

D8. Spurtreue und Fahrverhalten + Zeitstempel

Das Fahrverhalten eines Fahrzeugs, wie die Spurhaltung oder die Art und Weise, wie es beschleunigt oder bremst, zusammen mit einem entsprechenden Zeitstempel kann dazu beitragen, die Übereinstimmung des Fahrzeugs zwischen den Detektionseinheiten zu verifizieren.

Die Zeitstempelung spielt eine zentrale Rolle, wenn es darum geht, die Identifikation eines Fahrzeugs zu bestätigen, besonders in Kombination mit anderen visuellen Merkmalen wie Kennzeichen, Farbe, 3D-Profil oder Silhouette oder Fahrtrichtung. Sie erlaubt es, den zeitlichen Zusammenhang zwischen den Erfassungen an verschiedenen Detektionspunkten zu überprüfen und so sicherzustellen, dass das richtige Fahrzeug verfolgt wird, selbst wenn mehrere ähnliche Fahrzeuge in der Nähe sind.

Ferner kann es im Rahmen der Erfindung vorgesehen sein, dass der Detektionsalgorithmus ein erstes maschinen-gelerntes Netz aufweist, welches die Empfangsdaten als Input verwendet und bei dem Detektieren in Abhängigkeit von den Empfangsdaten das Detektionsergebnis bereitstellt, wobei insbesondere der Aufnahmealgorithmus ein zweites maschinen-gelerntes Netz aufweist, um ein erneutes Detektieren durchzuführen.

Demnach können die Detektionseinheit und/oder Aufnahmeeinheit (jeweils, insbesondere separate) Mittel zur Datenverarbeitung aufweisen, z. B. einen Computer und/oder eine Steuereinheit. Dabei kann bevorzugt die Detektionseinheit den Detektionsalgorithmus aufweisen. Es kann vorgesehen sein, dass die Detektionseinheit als (erste) Kamera, (erste) (3D-)Lidar-Einheit und/oder (erste) Radareinheit ausgestaltet ist. Dabei kann diese ein (verkapseltes) Mittel zur Datenverarbeitung aufweisen und insbesondere den Detektionsalgorithmus implementieren. Dabei kann bevorzugt die Aufnahmeeinheit den Aufnahmealgorithmus aufweisen. Es kann vorgesehen sein, dass die Aufnahmeeinheit als (zweite) Kamera, (zweite) (3D-)Lidar-Einheit und/oder (zweite) Radareinheit ausgestaltet ist. Dabei kann diese ein (verkapseltes) Mittel zur Datenverarbeitung aufweisen, und insbesondere den Aufnahmealgorithmus implementieren.

In Bezug auf die vorliegende Erfindung ist es vorstellbar, dass, insbesondere vor dem Erfassen, ein zumindest teilweises Aktivieren der Detektionseinheit und/oder der Aufnahmeeinheit durchgeführt wird, in Abhängigkeit von einem Ermitteln einer Fahrt eines Fahrzeugs durch eine Ermittlungseinheit, wobei die Ermittlungseinheit eine Radareinheit und/oder Lidar-Einheit aufweist, welche vorzugsweise in der Detektionseinheit integriert ist.

Die Ermittlungseinheit kann dabei separat ausgestaltet sein. Dies kann den Energiebedarf und/oder die Redundanz optimieren. Die Ermittlungseinheit kann beispielsweise an einem anderen, insbesondere weiter entfernten und/oder auf die Fahrbahn bezogen weiter vorne liegenden Ort angeordnet sein. Die Ermittlungseinheit kann auch in der Aufnahmeeinheit und/oder Detektionseinheit integriert sein. Es kann vorgesehen sein, dass die Ermittlungseinheit eine Lichtschranke aufweist und/oder als solche ausgestaltet ist. Die Ermittlungseinheit kann über eine Datenverbindung mit der Aufnahmeeinheit und/oder Detektionseinheit verbunden sein. Die Ermittlungseinheit, Aufnahmeeinheit und/oder Detektionseinheit kann auch von extern Informationen übermittelt bekommen (z. B. Warnmeldung über Fahrauffälligkeit auf dieser Strecke).

Ferner ist es vorstellbar, dass bei dem Detektieren der Detektionsalgorithmus durch die und/oder in der Detektionseinheit durchgeführt wird.

Es ist auch denkbar, dass (alternativ) eine gemeinsame Steuereinheit vorgesehen ist. Alternativ oder zusätzlich kann ein Übermitteln, insbesondere der Empfangsdaten, des Detektionsergebnisses und/oder Aufnahmeergebnisses erfolgen, z. B. an ein Backend und/oder eine Cloud, etwa über das Internet. Dabei/davor kann bevorzugt ein Verschlüsseln der Daten durchgeführt werden.

Im Rahmen der Erfindung kann es von Vorteil sein, dass nach dem Ausgeben des Detektionsergebnisses die Detektionseinheit die Empfangsdaten und das Detektionsergebnis, insbesondere aus einem Speicher der Detektionseinheit, löscht, wobei vorzugsweise anschließend das erneute Detektieren durchgeführt wird.

Ein (Kameraaufnahme-)system bzw. Detektionseinheit als System, bei dem die Daten nach einer kurzen Auswertung direkt unwiderruflich gelöscht werden, bietet aus Datenschutzsicht zahlreiche Vorteile. Diese betreffen insbesondere den Schutz der Privatsphäre, die Minimierung von Risiken durch Datenmissbrauch und die Einhaltung datenschutzrechtlicher Prinzipien.

Vorteile:

E1. Minimierung der Datenspeicherungsdauer

Die schnelle und unwiderrufliche Löschung der Daten reduziert die Dauer, in der personenbezogene Informationen gespeichert werden. Je kürzer die Speicherdauer, desto geringer das Risiko, dass diese Daten für unbefugte Zwecke verwendet werden oder in falsche Hände geraten. Dadurch wird die Wahrscheinlichkeit von Datenschutzverletzungen erheblich verringert.

E2. Schutz der Privatsphäre

Durch die rasche Löschung der Daten wird der Eingriff in die Privatsphäre der betroffenen Personen auf ein Minimum beschränkt. Sobald der eigentliche Zweck der Datenverarbeitung - wie etwa die Überprüfung auf eine Ordnungswidrigkeit oder Gefährdungshandlung - erfüllt ist, gibt es keinen weiteren Grund, die Daten aufzubewahren. Dies sorgt dafür, dass personenbezogene Daten nur im unbedingt notwendigen Ausmaß verarbeitet werden.

E3. Vermeidung von Missbrauch oder unerlaubtem Zugriff

Je weniger Daten gespeichert werden, desto geringer ist das Risiko eines Missbrauchs oder eines unbefugten Zugriffs. In Systemen, in denen Daten schnell gelöscht werden, besteht weniger Anreiz für Hacker oder interne Akteure, unberechtigt auf die Daten zuzugreifen. Auch das Risiko, dass die Daten versehentlich an Dritte weitergegeben oder für andere Zwecke missbraucht werden, wird durch die kurzfristige Speicherung minimiert.

E4. Einhaltung des Prinzips der Datenminimierung

Dieses System entspricht dem datenschutzrechtlichen Prinzip der Datenminimierung, das besagt, dass nur die Daten verarbeitet werden dürfen, die für den jeweiligen Zweck notwendig sind. Indem die Daten nach ihrer Auswertung schnell gelöscht werden, wird sichergestellt, dass nur so lange auf personenbezogene Daten zugegriffen wird, wie es zur Erfüllung des Zwecks erforderlich ist.

E5. Weniger Speicherplatzbedarf und geringere Kosten

Durch die schnelle Löschung der Daten wird auch der Bedarf an Speicherplatz minimiert. Dies hat nicht nur technische Vorteile, sondern senkt auch die Kosten für die Speicherung und Verwaltung gro-ßer Datenmengen. Weniger Daten bedeuten weniger Aufwand bei der Sicherung und Verwaltung, was die Effizienz des Systems steigern kann.

E6. Reduzierung von rechtlichen Risiken

Wenn Daten länger als notwendig gespeichert werden, besteht das Risiko, dass dies gegen nationale und internationale Datenschutzgesetze verstößt. Die unmittelbare Löschung der Daten stellt sicher, dass die gesetzlichen Speicherfristen eingehalten werden, was das Risiko von Sanktionen durch Aufsichtsbehörden erheblich verringert. Dies schützt sowohl die Verantwortlichen als auch die Betroffenen vor rechtlichen Konsequenzen.

E7. Erhöhtes Vertrauen in das System

Ein System, das darauf ausgelegt ist, Daten nach einer kurzen Auswertung zu löschen, kann das Vertrauen der Öffentlichkeit stärken. Bürgerinnen und Bürger wissen, dass ihre Daten nicht dauerhaft gespeichert oder für andere Zwecke missbraucht werden können. Dies fördert ein positives Bild hinsichtlich der Einhaltung des Datenschutzes und der Wahrung der individuellen Rechte.

E8. Geringere Missbrauchsgefahr durch interne Mitarbeiter

Auch intern wird das Risiko von Missbrauch deutlich verringert. In Systemen, in denen Daten nur für kurze Zeit verfügbar sind, besteht für Mitarbeitende der Behörden oder Unternehmen weniger Gelegenheit, auf die Daten zuzugreifen und sie unbefugt zu nutzen.

E9. Schutz vor unvorhergesehenen Vorfällen

Selbst bei unvorhergesehenen Vorfällen wie einem Systemfehler, Datenlecks oder Hackerangriffen ist der Schaden durch solche Ereignisse begrenzt, da die Daten ohnehin nur sehr kurzfristig gespeichert werden. Ein Datendiebstahl wäre weniger schwerwiegend, weil die sensiblen Informationen bereits gelöscht wären.

Fazit:

Ein (Kameraaufnahme)system bzw. Detektionseinheit als System, das Daten nach kurzer Auswertung unwiderruflich löscht, schützt die Privatsphäre und reduziert das Risiko von Datenschutzverletzungen erheblich. Es minimiert die Datenverarbeitung auf das unbedingt notwendige Maß, verringert die Möglichkeit von Missbrauch und unbefugtem Zugriff und gewährleistet die Einhaltung gesetzlicher Vorgaben. Bei Fahndungen nach einem Verbrecher kann es unverhältnismäßig sein, einen Generalverdacht gegen alle Fahrzeugführer zu erheben und zu filmen. Besser wäre zunächst die Erhebung eines konkreten Anfangsverdachts. Diese Maßnahmen stärken das Vertrauen in das System und fördern eine datenschutzfreundliche Praxis.

Dabei kann die Detektionseinheit gegen eine weitere Ausleitung von Daten und/oder Bildern (außer der oben genannten), z. B. durch ein elektronisches Siegel bzw. ein behördlich versiegeltes System, geschützt sein. Die Detektionseinheit kann demnach gekapselt ausgestaltet sein. Die Detektionseinheit kann dafür eingerichtet sein, lediglich eine binäre Ausgabe zu erzeugen, wobei das Detektionsergebnis (lediglich) spezifisch ist für ein allgemeines Vorliegen einer Gefährdungshandlung. Dadurch kann die Privatsphäre besser geschützt werden. Dies kann auch das Erkennen von Gefährdungshandlungen allgemein und/oder von einer Ablenkung des Fahrers im Besonderen optimieren.

Ein behördlich versiegeltes System bzw. Kamerasystem bzw. Detektionseinheit bietet mehrere Vorteile in Bezug auf den Datenschutz, insbesondere im Hinblick auf die Sicherheit, den Schutz vor Missbrauch und die Wahrung der Privatsphäre der betroffenen Personen. Insbesondere die entsprechenden Hersteller und Servicegesellschaften der Verkehrsüberwachungsgeräte hätten keinen Zugriff auf solche Daten, welche zur Vorhersage herangezogen werden sollen bzw. gelöscht werden.

Vorteile:

F1. Manipulationsschutz

Ein versiegeltes Kamerasystem bzw. System (als Detektionseinheit), das von Behörden eingerichtet und überwacht wird, ist vor Manipulationen durch Unbefugte geschützt. Das bedeutet, dass die aufgezeichneten Daten nicht unrechtmäßig verändert, gelöscht oder unbefugt eingesehen werden können. Dadurch wird die Integrität der Daten gewahrt und der Missbrauch von Aufnahmen verhindert.

F2. Klare Verantwortlichkeit

Bei einem behördlich versiegelten System ist die Zuständigkeit und Verantwortung klar geregelt. Nur autorisierte Personen, in der Regel staatliche oder behördliche Akteure, haben Zugang zu den gespeicherten Daten. Dies minimiert das Risiko, dass sensible Daten in falsche Hände geraten oder für unzulässige Zwecke verwendet werden.

F3. Begrenzter Zugriff auf Daten

Ein versiegeltes System kann so konfiguriert sein, dass nur in bestimmten Fällen auf die Daten zugegriffen werden darf, beispielsweise bei einem Anfangsverdacht einer Straftat oder Verkehrsordnungswidrigkeit bzw. Gefährdungshandlung. Dies stellt sicher, dass personenbezogene Daten nicht willkürlich oder massenhaft erhoben und verwendet werden.

F4. Erhöhte Datensicherheit

Durch die Versiegelung wird gewährleistet, dass das System nach hohen Sicherheitsstandards betrieben wird. Verschlüsselungen und Zugangsprotokolle können sicherstellen, dass die Daten nur von den vorgesehenen Behörden und nur im Rahmen der gesetzlichen Vorgaben verwendet werden. Unberechtigter Zugriff oder Datenlecks werden durch zusätzliche Sicherheitsmaßnahmen minimiert.

F5. Transparenz und Vertrauen

Ein behördlich versiegeltes System kann das Vertrauen der Bürgerinnen und Bürger stärken, da sie sicher sein können, dass die Überwachung und Datenverarbeitung im Einklang mit den gesetzlichen Datenschutzvorgaben erfolgt. Durch die Versiegelung wird signalisiert, dass das System kontrolliert und geschützt ist, und es wird transparent gemacht, dass die Nutzung ausschließlich zu legitimen Zwecken erfolgt.

F6. Einhaltung von Datenschutzvorgaben

Versiegelte Systeme gewährleisten, dass die Verarbeitung personenbezogener Daten im Einklang mit den Datenschutzbestimmungen erfolgt. Es wird sichergestellt, dass nur die erforderlichen Daten erhoben werden und dass diese noch weit vor Ablauf der gesetzlichen Speicherfristen gelöscht werden. Dies schützt die Privatsphäre der Betroffenen und reduziert das Risiko eines Datenschutzverstoßes.

F7. Rechtssicherheit

Für die Behörden selbst bietet ein versiegeltes System den Vorteil der Rechtssicherheit. Es zeigt, dass das (Kamera-)system den gesetzlichen Anforderungen entspricht und ordnungsgemäß betrieben wird. So können Behörden im Fall von Rechtsstreitigkeiten oder Prüfungen durch Datenschutzbehörden nachweisen, dass sie die geltenden Datenschutzrichtlinien einhalten.

Im Rahmen der Erfindung ist es denkbar, dass das Ausgeben und/oder Aufnehmen ein Anzeigen eines Warnsignals in Abhängigkeit von dem Detektionsergebnis umfasst, welches über eine Anzeigeneinheit, insbesondere einen Bildschirm, einen Lautsprecher und/oder eine Warnleuchte, ausgegeben wird (beispielsweise von oberhalb der Fahrbahn).

Die Anzeigeeinheit kann oberhalb der Fahrbahn angeordnet sein. Dadurch kann ein Warnen anderer Verkehrsteilnehmer ermöglicht werden. Dies kann die Sicherheit erhöhen. Das Warnsignal kann durch ein Weiterleiten an eine Einsatzzentrale und/oder zumindest ein Einsatzfahrzeug übermittelt werden. Die obenstehende Aufgabe wird gemäß einem zweiten Aspekt gelöst durch einen erfindungsgemäßen computerlesbaren Datenträger, in welchem Befehle hinterlegt sind, die bei der Ausführung durch einen Computer diesen veranlassen, das Verfahren gemäß dem ersten Aspekt durchzuführen.

Dabei kann die Detektionseinheit und/oder die Aufnahmeeinheit den Computer umfassen und/oder die Schritte implementieren. Es kann vorgesehen sein, dass die Detektionseinheit und/oder die Aufnahmeeinheit ein entsprechendes Computerprogrammprodukt aufweisen, umfassend Befehle, die bewirken, dass die Detektionseinheit und/oder die Aufnahmeeinheit und/oder das System gemäß dem fünften Aspekt das Verfahren gemäß dem ersten Aspekt ausführt.

Damit ergeben sich in Bezug auf einen erfindungsgemäßen computerlesbaren Datenträger gemäß dem zweiten Aspekt die gleichen Vorteile, wie sie bereits in Bezug auf ein erfindungsgemäßes Verfahren gemäß dem ersten Aspekt beschrieben worden sind.

Die obenstehende Aufgabe wird gemäß einem dritten Aspekt gelöst durch eine erfindungsgemäße Detektionseinheit, welche eingerichtet ist zum Durchführen des Verfahrens gemäß dem ersten Aspekt, insbesondere zum Erfassen, Detektieren und/oder Ausgeben.

Damit ergeben sich in Bezug auf eine erfindungsgemäße Detektionseinheit gemäß dem dritten Aspekt die gleichen Vorteile, wie sie bereits in Bezug auf ein erfindungsgemäßes Verfahren gemäß dem ersten Aspekt und/oder einen erfindungsgemäßen computerlesbaren Datenträger gemäß dem zweiten Aspekt beschrieben worden sind.

Die obenstehende Aufgabe wird gemäß einem vierten Aspekt gelöst durch eine erfindungsgemäße Aufnahmeeinheit, welche eingerichtet ist zum Durchführen des Verfahrens gemäß dem ersten Aspekt, insbesondere zum Aufnehmen.

Damit ergeben sich in Bezug auf eine erfindungsgemäße Aufnahmeeinheit gemäß dem vierten Aspekt die gleichen Vorteile, wie sie bereits in Bezug auf ein erfindungsgemäßes Verfahren gemäß dem ersten Aspekt und/oder einen erfindungsgemäßen computerlesbaren Datenträger gemäß dem zweiten Aspekt und/oder eine erfindungsgemäße Detektionseinheit gemäß dem dritten Aspekt beschrieben worden sind.

Die obenstehende Aufgabe wird gemäß einem fünften Aspekt gelöst durch ein erfindungsgemäßes System zum Erkennen einer Gefährdungshandlung bei einer Fahrt eines Fahrzeugs durch einen Fahrer, aufweisend eine Detektionseinheit, insbesondere gemäß dem dritten Aspekt, und eine Aufnahmeeinheit, insbesondere gemäß dem vierten Aspekt, welche zum Durchführen des Verfahrens gemäß dem ersten Aspekt eingerichtet sind.

Das System kann demnach zur Datenverarbeitung eingerichtet sein. Das System, insbesondere die Detektionseinheit und/oder Aufnahmeeinheit, kann Mittel zur Datenverarbeitung und/oder zur Ausführung der Schritte des Verfahrens gemäß dem ersten Aspekt aufweisen.

Die Detektionseinheit und die Aufnahmeeinheit können dabei (physisch) nebeneinander und/oder übereinander angeordnet sein, und insbesondere zum Überwachen einer Straße und/oder eines Stra-ßenabschnitts eingerichtet sein. Dies kann eine kompakte Bauform (des Systems) ermöglichen.

Damit ergeben sich in Bezug auf ein erfindungsgemäßes System gemäß dem fünften Aspekt die gleichen Vorteile, wie sie bereits in Bezug auf ein erfindungsgemäßes Verfahren gemäß dem ersten Aspekt und/oder einen erfindungsgemäßen computerlesbaren Datenträger gemäß dem zweiten Aspekt und/oder eine erfindungsgemäße Detektionseinheit gemäß dem dritten Aspekt und/oder eine erfindungsgemäße Aufnahmeeinheit gemäß dem vierten Aspekt beschrieben worden sind.

Es kann im Rahmen der Erfindung vorgesehen sein, dass die Detektionseinheit und die Aufnahmeeinheit voneinander beabstandet angeordnet sind, wobei insbesondere die Detektionseinheit und die Aufnahmeeinheit jeweils einen unterschiedlichen Betrachtungswinkel relativ zu einem Fahrzeug und/oder einem Fahrer aufweisen.

Es kann demnach vorgesehen sein, dass die Detektionseinheit und die Aufnahmeeinheit an unterschiedlichen Standorten positioniert sind (quasi ein verteiltes System). Dies kann unterschiedliche Blickwinkel auf eine Fahrbahn ermöglichen. So kann beispielsweise eine Detektionseinheit, welche eine (3D-)Lidar-Einheit aufweist, an einem anderen Ort, z. B. einem weiter entfernten Ort angeordnet sein. Dadurch kann ein größerer Detektionsbereich überwacht werden. Eine Aufnahmeeinheit, welche eine Kamera aufweist, kann beispielsweise näher an der Fahrbahn, insbesondere oberhalb der Fahrbahn angeordnet sein. Dadurch kann die Auflösung, beispielsweise im Bereich um den Fahrer, verbessert werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigen jeweils schematisch:

Figur 1 ein Verfahren,
Figur 2 ein Fahrzeug,
Figur 3 ein Fahrzeug,
Figur 4 ein Fahrzeug,
Figur 5 ein System und
Figur 6 eine Architektur von Detektionsalgorithmen .

In den Figuren werden für die gleichen technischen Merkmale, auch von unterschiedlichen Ausführungsbeispielen, die identischen Bezugszeichen verwendet.

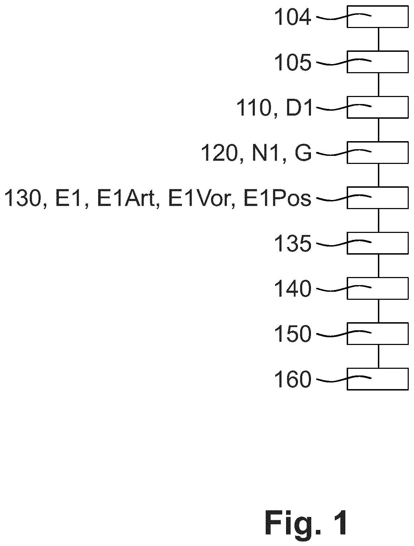

Fig. 1 zeigt ein Verfahren zum Erkennen einer Gefährdungshandlung G bei einer Fahrt eines Fahrzeugs 200 durch einen Fahrer 201, aufweisend:

- Erfassen 110, durch eine Detektionseinheit 1, von Empfangsdaten D1, welche spezifisch sind für eine Fahrt des Fahrzeugs 200,
- Detektieren 120, durch einen Detektionsalgorithmus N1, einer Gefährdungshandlung G bei der Fahrt des Fahrzeugs 200 durch den Fahrer 201 in Abhängigkeit von den Empfangsdaten D1,
- Ausgeben 130, durch die Detektionseinheit 1, eines Detektionsergebnisses E1 in Abhängigkeit von dem Detektieren 120 und
- Aufnehmen 140, durch eine Aufnahmeeinheit 2, einer Aufnahme des Fahrers 201 in Abhängigkeit von dem Detektionsergebnis E1.

Im Rahmen der Erfindung kann es von Vorteil sein, dass das Aufnehmen 140 ein erneutes Detektieren 150 der Gefährdungshandlung G aufweist.

Im Rahmen der Erfindung ist es denkbar, dass das erneute Detektieren 150 durch die Aufnahmeeinheit 2, insbesondere durch einen Aufnahmealgorithmus N2, durchgeführt wird.

Es kann im Rahmen der Erfindung vorgesehen sein, dass das erneute Detektieren 150 durch die Detektionseinheit 1, insbesondere durch den Detektionsalgorithmus N1, durchgeführt wird.

Es ist ferner denkbar, dass bei dem Erfassen 110 die Empfangsdaten D1 spezifisch sind für

- eine Geschwindigkeit des Fahrzeugs 200,
- eine Beschleunigung des Fahrzeugs 200,
- eine Fahrtrajektorie des Fahrzeugs 200, insbesondere relativ zu einer Fahrspurbegrenzung, und/oder
- einen Abstand des Fahrzeugs 200, insbesondere relativ zu vorausfahrenden Fahrzeugen.

Auch ist es denkbar, dass das Erfassen 110, durch die Detektionseinheit 1, insbesondere eine Kameraeinheit, Radareinheit und/oder eine Lidar-Einheit, vorzugsweise eine 3D-Lidareinheit, über einen Erfassungszeitraum, insbesondere wiederholt, durchgeführt wird, für welchen die Empfangsdaten D1 spezifisch sind, wobei für das Detektieren 120 der Detektionsalgorithmus N1 dazu eingerichtet ist, basierend auf den Empfangsdaten D1 ein Vorliegen E1 Vor und eine Art E1 Art der Gefährdungshandlung G zu ermitteln, wobei das Detektionsergebnis E1 für das Vorliegen E1 Vor und die Art E1Art der Gefährdungshandlung G spezifisch ist, wobei insbesondere die Art E1 Art der Gefährdungshandlung G umfasst:

- ein Abweichen, insbesondere einer Trajektorie, des Fahrzeugs 200 von einer vorgegebenen Fahrspur,
- eine überhöhte oder unterdurchschnittliche Geschwindigkeit des Fahrzeugs 200,
- eine überhöhte oder unterdurchschnittliche, insbesondere erwartete, Beschleunigung des Fahrzeugs 200,
- ein unzureichender Sicherheitsabstand des Fahrzeugs 200,
- eine Ablenkung des Fahrers 201, insbesondere durch ein mobiles Endgerät 202, und/oder
- eine unzureichende Sicherung, insbesondere des Fahrers 201, durch einen Sicherheitsgurt.

Im Rahmen der Erfindung ist es optional möglich, dass das Detektionsergebnis E1 eine Positionsinformation E1Pos aufweist, welche für eine Position des Fahrzeugs 200 und/oder des Fahrers 201 spezifisch ist, wobei die Positionsinformation E1Pos bei dem Erfassen 110 und/oder Detektieren 120 ermittelt wird, und durch das Ausgeben 130, insbesondere über eine Datenverbindung Con, an die Aufnahmeeinheit 2 übermittelt wird, wobei insbesondere ein Einstellen 135 der Aufnahmeeinheit 2 in Abhängigkeit von der Positionsinformation E1Pos durchgeführt wird. Das Einstellen 135 kann auch mit einem Einstellen eines Bildausschnitts und insbesondere einer Vergrößerung des Point of Interests (POI) einhergehen.

Ferner kann es im Rahmen der Erfindung vorgesehen sein, dass der Detektionsalgorithmus N1 ein erstes maschinen-gelerntes Netz aufweist, welches die Empfangsdaten D1 als Input verwendet und bei dem Detektieren 120 in Abhängigkeit von den Empfangsdaten D1 das Detektionsergebnis E1 bereitstellt, wobei insbesondere der Aufnahmealgorithmus N2 ein zweites maschinen-gelerntes Netz aufweist, um ein erneutes Detektieren 150 durchzuführen. Somit handelt es sich in einer besonders bevorzugten Ausführung um eine Vernetzung von mindestens zwei Algorithmen N1, N2, Nx, welche untereinander lernfähig sind durch zur Verfügungstellung von Trainingsdaten, welche kontinuierlich im Betrieb erweitert werden.

In Bezug auf die vorliegende Erfindung ist es vorstellbar, dass, insbesondere vor dem Erfassen 110, ein zumindest teilweises Aktivieren 105 der Detektionseinheit 1 und/oder der Aufnahmeeinheit 2 durchgeführt wird, in Abhängigkeit von einem Ermitteln 104 einer Fahrt eines Fahrzeugs 200 durch eine Ermittlungseinheit, wobei die Ermittlungseinheit eine Radareinheit und/oder Lidar-Einheit aufweist, welche vorzugsweise in der Detektionseinheit 1 integriert ist.

Ferner ist es vorstellbar, dass bei dem Detektieren 120 der Detektionsalgorithmus N1 durch die und/oder in der Detektionseinheit 1 durchgeführt wird.

Im Rahmen der Erfindung kann es von Vorteil sein, dass nach dem Ausgeben 130 des Detektionsergebnisses E1 die Detektionseinheit 1 die Empfangsdaten D1 und das Detektionsergebnis E1, insbesondere aus einem Speicher der Detektionseinheit 1, löscht, wobei vorzugsweise anschließend das erneute Detektieren 150 durchgeführt wird. Das Löschen kann bevorzugt unmittelbar nach der Datenerfassung und anschließender Datenauswertung erfolgen. Besonders bevorzugt erfolgt ein Löschen nach 1-10 ms nach Datenerfassung oder nach 10-100 ms nach Datenerfassung oder nach 100 ms bis 1 s oder 1s bis 60s nach Datenerfassung. Es ist auch denkbar, dass benannte Löschzeitpunkte ab dem Zeitpunkt der Datenauswertung erfolgen. Die maximale Speicherdauer der Daten soll 24 Stunden nicht überschreiten.

Es kann in einer besonders bevorzugten datenschutzkonformen Ausgestaltung vorkommen, dass lediglich der Output und/oder Output in Kombination mit einem Kennzeichen (Nummernschild) oder Teil von diesem oder verschlüsseltem String oder Zeichenabfolge existiert und die übrigen Daten der zeitlich betrachtet ersten Detektionseinheit gelöscht werden oder gelöscht wurden.

Des Weiteren sind beispielhaft mindestens alle Kombinationen als Output aus der Detektionseinheit 1 und Input für die Detektionseinheit 2 ausführbar, die unter C1-C12 und D1-D8 (siehe oben) aufgeführt sind. Diese Merkmale sind entweder vorgesehen, gelöscht zu werden oder als Zuordnungsmerkmal dauerhaft gespeichert zu werden.

Im Rahmen der Erfindung ist es denkbar, dass das Ausgeben 130 und/oder Aufnehmen 140 ein Anzeigen 160 eines Warnsignals in Abhängigkeit von dem Detektionsergebnis E1 umfasst, welches über eine Anzeigeneinheit, insbesondere einen Bildschirm, einen Lautsprecher und/oder eine Warnleuchte, ausgegeben wird.

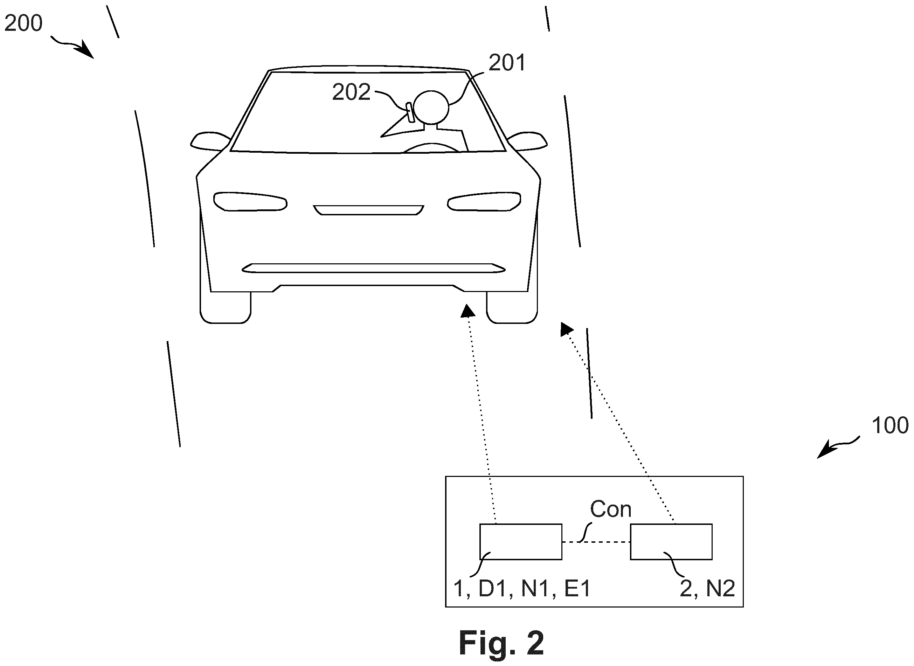

Fig. 2 zeigt ein System 100, umfassend eine Detektionseinheit 1 und/oder eine Aufnahmeeinheit 2, welche eingerichtet ist/sind zum Durchführen des Verfahrens gemäß dem ersten Aspekt und/oder gemäß Fig. 1. Dabei kann die Detektionseinheit 1 durch ein Erfassen 110 Empfangsdaten D1 ermitteln, welche insbesondere für eine Fahrt des Fahrzeugs 200 spezifisch sind. Die Detektionseinheit 1 kann durch ein Detektieren 120 über einen Detektionsalgorithmus N1 ein Detektionsergebnis E1 bereitstellen (z.B. in Verbindung mit einem mobilen Endgerät 202, einer Maske oder einer Pistole innerhalb der Fahrgastzelle). Somit erfolgt ein erstes Detektieren einer möglichen Gefährdungshandlung und damit eines möglichen Verkehrsverstoßes (infringing act) vor- insbesondere zeitlich vor- dem Detektieren z.B. einer unerlaubten Benutzung (infringing act) eines Mobile Phones mittels Aufnahmeeinheit (Kamera) im Fahrerfoto. Die Aufnahmeeinheit 2 kann einen Aufnahmealgorithmus N2 aufweisen.

Dadurch kann eine Gefährdungshandlung G, insbesondere des Fahrers 201, z. B. bezüglich eines mobilen Endgeräts 202 oder eines gefährlichen oder auffälligen Gegenstands (z.B. Maske, Pistole) in der Umgebung des Fahrers oder innerhalb der Fahrgastzelle, festgestellt werden.

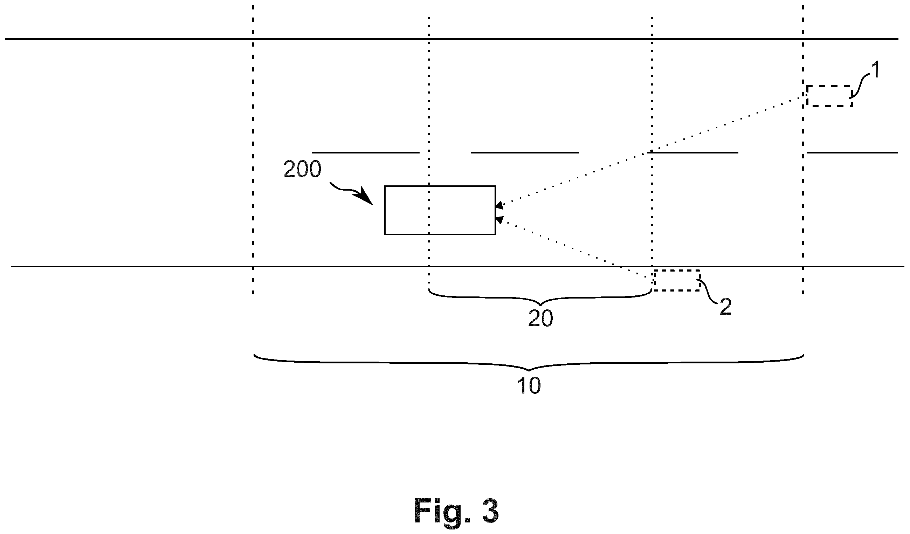

Fig. 3 zeigt beispielhaft eine Detektionseinheit 1 mit einem Detektionsbereich 10, innerhalb welchem vorzugsweise ein Erfassen 110 erfolgen kann. Auch gezeigt ist eine Aufnahmeeinheit 2 mit einem Aufnahmebereich 20, innerhalb welchem vorzugsweise ein erneutes Erfassen und/oder erneutes Detektieren erfolgen kann. Beispielhaft überschneiden sich der Aufnahmebereich 20 und der Detektionsbereich 10, wobei der Aufnahmebereich 20 kleiner ist. Das Fahrzeug 200 kommt vom linken Bildrand.

Das Fahrzeug 200 fährt erst in den Detektionsbereich 10 ein. Sobald eine Gefährdungshandlung durch das Detektieren 120 ermittelt wurde, kann die Aufnahmeeinheit 2 übernehmen, vorzugsweise, solange das Fahrzeug 200 den Aufnahmebereich 20 durchfährt. Detektionseinheit 1 kann hier als Trigger für die Aufnahmeeinheit 2 und Auslösen einer Beleuchtung (Blitz, nicht dargestellt) verwendet werden. Die umgekehrte Konstellation der Triggerung der Detektionseinheit 1 durch die Aufnahmeeinheit 2 ist ebenfalls durchführbar. Der Trigger könnte hier auch unabhängig von 1 und 2 durch einen weiteren Sensor (hier nicht dargestellt) erfolgen.

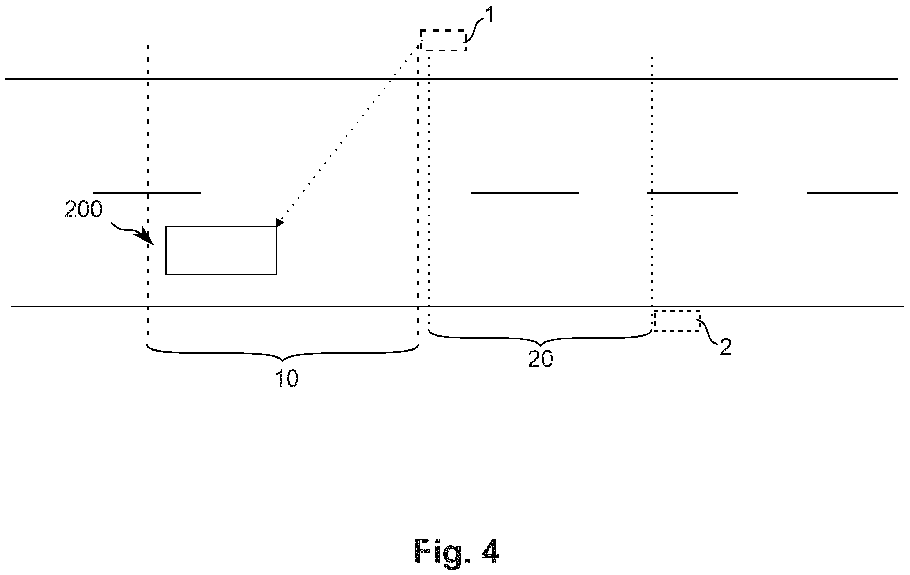

Fig. 4 zeigt in Anlehnung an Fig. 3 beispielhaft einen Aufnahmebereich 20, welcher nach dem Detektionsbereich 10 angeordnet ist, wobei kein Überschneidungsbereich vorgesehen ist.

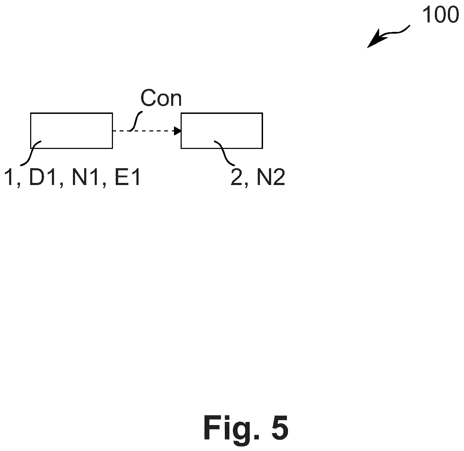

Fig. 5 zeigt beispielhaft ein System 100 mit einer (verkapselten, behördlich versiegelten) Detektionseinheit 1 und einer Aufnahmeeinheit 2. Dabei kann die Detektionseinheit vorzugsweise lediglich ein binäres Detektionsergebnis E1 an die Aufnahmeeinheit 2 weiterleiten, insbesondere ob eine Gefährdungshandlung G vorliegt oder nicht ("ja" oder "nein", I/O). Es erfolgt vorzugsweise ein Löschen der datenschutzrelevanten Daten (Bildaufnahme der Gefährdungshandlung bzw. der verkehrskonformen, nicht zu beanstandende Handlung) nach wenigen Millisekunden nach Datenerhebung und Auswertung (Fahrerfoto). Im Falle einer Detektion einer Gefährdungshandlung können diese Daten auch beibehalten werden und weiterverwendet werden - im Falle, dass keine Gefährdungshandlung detektiert wurde und vorliegt, werden die Daten unwiderruflich unmittelbar automatisch gelöscht.

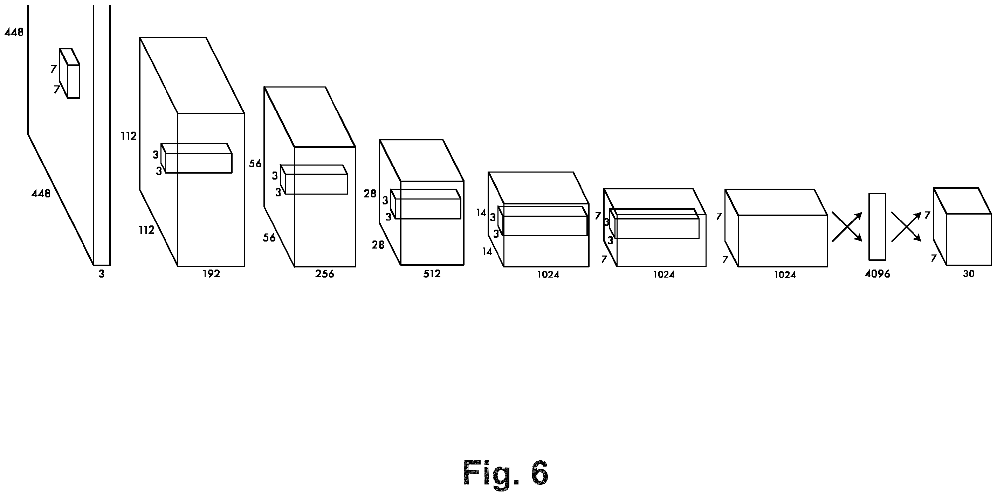

Fig. 6 zeigt beispielhaft eine Übersicht über eine Architektur eines Detektionsalgorithmus N1 und/oder eines Aufnahmealgorithmus N2.

## Bezugszeichenliste

| | |
|---|---|
| 1 | Detektionseinheit |
| 2 | Aufnahmeeinheit |
| 10 | Detektionsbereich |
| 20 | Aufnahmebereich |
| 100 | System |
| 104 | Ermitteln einer Fahrt eines Fahrzeugs |
| 105 | Aktivieren der Detektionseinheit |
| 110 | Erfassen von Empfangsdaten |
| 120 | Detektieren einer Gefährdungshandlung |
| 130 | Ausgeben eines Detektionsergebnisses |
| 135 | Einstellen der Aufnahmeeinheit |

| | |
|---|---|
| 140 | Aufnehmen einer Aufnahme des Fahrers |
| 150 | erneutes Detektieren |
| 160 | Anzeigen eines Warnsignals |
| 200 | Fahrzeug |
| 201 | Fahrer |
| 202 | mobiles Endgerät |
| Con | Datenverbindung |
| D1 | Empfangsdaten |
| E1 | Detektionsergebnis |
| E1Art | Art der Gefährdungshandlung |
| E1 Pos | Positionsinformation |
| E1Vor | Vorliegen der Gefährdungshandlung |
| G | Gefährdungshandlung |
| N1 | Detektionsalgorithmus |
| N2 | Aufnahmealgorithmus |

**Patentansprüche**

1. Verfahren zum Erkennen einer Gefährdungshandlung (G) bei einer Fahrt eines Fahrzeugs (200) durch einen Fahrer (201), aufweisend:

   - Erfassen (110), durch eine Detektionseinheit (1), von Empfangsdaten (D1), welche spezifisch sind für eine Fahrt des Fahrzeugs (200),
   - Detektieren (120), durch einen Detektionsalgorithmus (N1), einer Gefährdungshandlung (G) bei der Fahrt des Fahrzeugs (200) durch den Fahrer (201) in Abhängigkeit von den Empfangsdaten (D1),
   - Ausgeben (130), durch die Detektionseinheit (1), eines Detektionsergebnisses (E1) in Abhängigkeit von dem Detektieren (120), und
   - Aufnehmen (140), durch eine Aufnahmeeinheit (2), einer Aufnahme des Fahrers (201) in Abhängigkeit von dem Detektionsergebnis (E1).

2. Verfahren nach Anspruch 1,
   **dadurch gekennzeichnet,**
   **dass** das Aufnehmen (140) ein erneutes Detektieren (150) der Gefährdungshandlung (G) aufweist.

3. Verfahren nach Anspruch 2,
   **dadurch gekennzeichnet,**
   **dass** das erneute Detektieren (150) durch die Aufnahmeeinheit (2), insbesondere durch einen Aufnahmealgorithmus (N2), durchgeführt wird.

4. Verfahren nach Anspruch 2,
   **dadurch gekennzeichnet,**
   **dass** das erneute Detektieren (150) durch die Detektionseinheit (1), insbesondere durch den Detektionsalgorithmus (N1), durchgeführt wird.

5. Verfahren nach einem der vorhergehenden Ansprüche,
   **dadurch gekennzeichnet,**
   **dass** bei dem Erfassen (110) die Empfangsdaten (D1) spezifisch sind für

   - eine Geschwindigkeit des Fahrzeugs (200),
   - eine Beschleunigung des Fahrzeugs (200),
   - eine Fahrtrajektorie des Fahrzeugs (200), insbesondere relativ zu einer Fahrspurbegrenzung, und/oder
   - einen Abstand des Fahrzeugs (200), insbesondere relativ zu vorausfahrenden Fahrzeugen.

6. Verfahren nach einem der vorhergehenden Ansprüche,
   **dadurch gekennzeichnet,**
   **dass** das Erfassen (110), durch die Detektionseinheit (1), insbesondere eine Kameraeinheit, Radareinheit und/oder eine Lidar-Einheit, vorzugsweise eine 3D-Lidareinheit, über einen Erfassungszeitraum, insbesondere wiederholt, durchgeführt wird, für welchen die Empfangspdaten (D1) spezifisch sind, wobei für das Detektieren (120) der Detektionsalgorithmus (N1) dazu eingerichtet ist, basierend auf den Empfangsdaten (D1) ein Vorliegen (E1Vor) und eine Art (E1Art) der Gefährdungshandlung (G) zu ermitteln, wobei das Detektionsergebnis (E1) für das Vorliegen (E1Vor) und die Art (E1Art) der Gefährdungshandlung (G) spezifisch ist, wobei insbesondere die Art (E1Art) der Gefährdungshandlung (G) umfasst:

- ein Abweichen, insbesondere einer Trajektorie, des Fahrzeugs (200) von einer vorgegebenen Fahrspur,
- eine überhöhte oder unterdurchschnittliche Geschwindigkeit des Fahrzeugs (200),
- eine überhöhte oder unterdurchschnittliche, insbesondere erwartete, Beschleunigung des Fahrzeugs (200),
- ein unzureichender Sicherheitsabstand des Fahrzeugs (200),
- eine Ablenkung des Fahrers (201), insbesondere durch ein mobiles Endgerät (202), und/oder
- eine unzureichende Sicherung, insbesondere des Fahrers (201), durch einen Sicherheitsgurt.

7. Verfahren nach einem der vorhergehenden Ansprüche,
**dadurch gekennzeichnet,**
**dass** das Detektionsergebnis (E1) eine Positionsinformation (E1Pos) aufweist, welche für eine Position des Fahrzeugs (200) und/oder des Fahrers (201) spezifisch ist, wobei die Positionsinformation (E1Pos) bei dem Erfassen (110) und/oder Detektieren (120) ermittelt wird, und durch das Ausgeben (130), insbesondere über eine Datenverbindung (Con), an die Aufnahmeeinheit (2) übermittelt wird, wobei insbesondere ein Einstellen (135) der Aufnahmeeinheit (2) in Abhängigkeit von der Positionsinformation (E1Pos) durchgeführt wird.

8. Verfahren nach einem der vorhergehenden Ansprüche,
**dadurch gekennzeichnet,**
**dass** der Detektionsalgorithmus (N1) ein erstes maschinen-gelerntes Netz aufweist, welches die Empfangsdaten (D1) als Input verwendet und bei dem Detektieren (120) in Abhängigkeit von den Empfangsdaten (D1) das Detektionsergebnis (E1) bereitstellt, wobei insbesondere der Aufnahmealgorithmus (N2) ein zweites maschinen-gelerntes Netz aufweist, um ein erneutes Detektieren (150) durchzuführen.

9. Verfahren nach einem der vorhergehenden Ansprüche,
**dadurch gekennzeichnet,**
**dass** das Ausgeben (130) und/oder Aufnehmen (140) ein Anzeigen (160) eines Warnsignals in Abhängigkeit von dem Detektionsergebnis (E1) umfasst, welches über eine Anzeigeneinheit, insbesondere einen Bildschirm, einen Lautsprecher und/oder eine Warnleuchte, ausgegeben wird.

10. Computerlesbarer Datenträger, in welchem Befehle hinterlegt sind, die bei der Ausführung durch einen Computer diesen veranlassen, das Verfahren nach einem der vorhergehenden Ansprüche durchzuführen.

11. Detektionseinheit (1), welche eingerichtet ist zum Durchführen des Verfahrens nach einem der vorhergehenden Ansprüche, insbesondere zum Erfassen (110), Detektieren (120) und/oder Ausgeben (130).

12. Aufnahmeeinheit (2), welche eingerichtet ist zum Durchführen des Verfahrens nach einem der vorhergehenden Ansprüche, insbesondere zum Aufnehmen (140).

13. System (100) zum Erkennen einer Gefährdungshandlung (G) bei einer Fahrt eines Fahrzeugs (200) durch einen Fahrer (201), aufweisend eine Detektionseinheit (1), insbesondere nach Anspruch 11, und eine Aufnahmeeinheit (2), insbesondere nach Anspruch 12, welche zum Durchführen des Verfahrens nach einem der vorhergehenden Ansprüche eingerichtet sind.

14. System (100) nach dem vorhergehenden Anspruch,
**dadurch gekennzeichnet,**
**dass** die Detektionseinheit (1) und die Aufnahmeeinheit (2) voneinander beabstandet angeordnet sind, wobei insbesondere die Detektionseinheit (1) und die Aufnahmeeinheit (2) jeweils einen unterschiedlichen Betrachtungswinkel relativ zu einem Fahrzeug (200) und/oder einem Fahrer (201) aufweisen.

**Fig. 1**

EP 4 726 694 A1

**Fig. 2**

Fig. 3

Fig. 4

EP 4 726 694 A1

EP 4 726 694 A1

100

Con

1, D1, N1, E1          2, N2

**Fig. 5**

**Fig. 6**

Europäisches
Patentamt

European
Patent Office

Office européen
des brevets

## EUROPÄISCHER RECHERCHENBERICHT

Nummer der Anmeldung

EP 24 20 5978

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 460 776 A1 (PREKER MICHAEL [DE]) 27. März 2019 (2019-03-27) | 1-7,9-14 | INV. G08G1/01 |
| Y | * Zusammenfassung * | 8 | B60W40/08 |
| | * Absätze [0011], [0012], [0014], [0015], [0017] - [0028], [0033], [0035], [0037], [0042], [0053], [0059], [0070] * | | B60W40/09 G06V20/54 G06V20/59 G06V40/20 |
| | * Ansprüche 1-10 * | | G08G1/015 |
| | * Abbildungen 1,4-6 * | | G08G1/017 |
| | ----- | | G08G1/04 |
| Y | US 2018/162275 A1 (PEDERSEN ROBERT D [US]) 14. Juni 2018 (2018-06-14) | 8 | G08G1/052 |
| A | * Zusammenfassung * | 1-7,9-14 | |
| | * Abbildungen 1,2,6,8,10,11,15 * | | |
| | * Absätze [0003], [0005], [0022], [0023], [0027], [0028], [0066], [0067], [0069], [0071], [0088], [0089], [0118], [0123], [0126], [0127] * | | |
| | * Absätze [0142], [0146] - [0151], [0198] - [0208] * | | RECHERCHIERTE SACHGEBIETE (IPC) |
| | * Ansprüche 26-46 * | | |
| | ----- | | G08G |
| A | US 2019/188505 A1 (MADKOR AHMED [AE] ET AL) 20. Juni 2019 (2019-06-20) | 1-14 | G06V B60W |
| | * Zusammenfassung * | | |
| | * Abbildungen 1,4,5 * | | |
| | * Absätze [0003], [0013], [0014], [0016], [0017], [0019] - [0024], [0029] - [0031], [0038], [0039], [0041], [0044], [0053], [0054] * | | |
| | * Ansprüche 1-29 * | | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 25. März 2025 | Quartier, Frank |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 20 5978

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-03-2025

| Im Recherchenbericht angeführtes Patentdokument | Datum der Veröffentlichung | Mitglied(er) der Patentfamilie | Datum der Veröffentlichung |
|---|---|---|---|
| EP 3460776 A1 | 27-03-2019 | DE 102017008116 A1 | 28-02-2019 |
| | | EP 3460776 A1 | 27-03-2019 |
| US 2018162275 A1 | 14-06-2018 | US 9919648 B1 | 20-03-2018 |
| | | US 2018162275 A1 | 14-06-2018 |
| | | US 2019054858 A1 | 21-02-2019 |
| | | US 2019389381 A1 | 26-12-2019 |
| | | US 2021001772 A1 | 07-01-2021 |
| | | US 2021284066 A1 | 16-09-2021 |
| | | US 2022063497 A1 | 03-03-2022 |
| | | US 2022355733 A1 | 10-11-2022 |
| | | US 2024116440 A1 | 11-04-2024 |
| | | US 2024278719 A1 | 22-08-2024 |
| US 2019188505 A1 | 20-06-2019 | KEINE | |

Für nähere Einzelheiten zu diesem Anhang : siehe Amtsblatt des Europäischen Patentamts, Nr.12/82

EPO FORM P0461